# EUROPÄISCHE PATENTSCHRIFT

(11) **EP 4 228 950 B1**
(45) Veröffentlichungstag und Bekanntmachung des Hinweises auf die Patenterteilung: **14.05.2025**
(21) Anmeldenummer: 21799195.9
(22) Anmeldetag: 12.10.2021
(51) Int. Cl.: B62D 5/00, F16D 57/00, B62D 6/00, B62D 7/22

(54) **LENKEINRICHTUNG MIT EINER MAGNETORHEOLOGISCHEN BREMSEINRICHTUNG UND VERFAHREN ZUM BETREIBEN EINER LENKEINRICHTUNG**
STEERING WHEEL WITH A MAGNETORHEOLOGICAL TORQUE GENERATOR
VOLANT AVEC GÉNÉRATEUR DE COUPLE MAGNETORHÉOLOGIQUE

(30) Priorität: 13.10.2020 DE 102020126916; 12.12.2020 DE 102020133246
(43) Veröffentlichungstag der Anmeldung: 23.08.2023
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2021/078180
(87) Internationale Veröffentlichungsnummer: WO 2022/079030

(56) Entgegenhaltungen:
- DE-A1- 10 221 241
- DE-A1- 102017 111 031
- DE-B3- 102004 009 906

## Beschreibung

Die Erfindung betrifft eine Lenkeinrichtung zum Steuern eines Fahrzeugs mittels einer bewegbaren Lenkeinheit sowie ein Verfahren zum Betreiben einer Lenkeinrichtung. Die Lenkeinrichtung umfasst eine magnetorheologische Bremseinrichtung mit einem feststehenden Halter und mit wenigstens zwei Bremskomponenten, die um eine Rotationsachse relativ zueinander kontinuierlich drehbar sind.

An solche Lenkeinrichtungen werden hohe Anforderungen gestellt. So werden beispielsweise präzise Lenkrückmeldungen und ein spielfreies bzw. ruckfreies Lenkverhalten besonders um die Mittellage sowie ein insgesamt sehr leichtgängiges harmonisches Lenkverhalten gefordert. Zudem muss die Bremseinrichtung hohe Bremsmomente bereitstellen können, beispielsweise für harte Endanschläge bei schnell drehendem Lenkrad (also hohe kinetische Energie, wenn das Lenkrad beim Rangieren rasch gedreht wird, zum Beispiel mit 1000°/s). Aufgrund der starken Zunahme der Bedienelemente im Lenkrad werden die Lenkräder immer schwerer, was die kinetische Energie erhöht. Hohe Bremsmomente werden zudem auch benötigt, wenn sich der Fahrer bzw. die Fahrerin (bzw. Nutzer/Nutzerin) beim Aussteigen oder Einsteigen am Lenkrad hält bzw. abstützt (Ein-/Ausstiegshilfe). Solche Bremsmomente können beispielsweise 25 Newtonmeter, 35 Newtonmeter oder mehr betragen.

Zugleich muss die Bremseinrichtung auch sehr niedrige Bremsmomente bereitstellen können (kleiner 1 Newtonmeter, bevorzugt kleiner 0,5 Newtonmeter), beispielsweise wenn zum Halten der Spur beim Geradeausfahren nur sehr leichte Lenkbewegungen vorgenommen werden. Ebenso sind niedrige Bremsmomente bei Lenkbewegungen um die Mittellage oder bei Richtungswechseln nötig (z.B. 1 bis 3 Newtonmeter), damit das Fahrzeug entsprechend weich geführt und eine kurvige Strecke schnell und zugleich harmonisch durchfahren werden kann. Insgesamt ist ein feinfühliges und präzises Lenken nur mit einer sehr leichtgängigen Lenkung möglich. Dazu sind beispielsweise Bremsmomente von weniger als einem Newtonmeter erwünscht.

Des Weiteren sollten verschiedene Bremsmomente möglichst ohne spürbare Übergänge bzw. stufenlos und mit hoher Regelgüte einstellbar sein. Zudem sollten die Bremsmomente mit möglichst kurzen Reaktionszeiten und beispielsweise in weniger als 100 ms einstellbar sein. Dabei ist der Bauraum für die Lenkeinrichtung in der Regel sehr begrenzt, beispielsweise in einem Armaturenbrett bei modernen Fahrzeugen mit Head-up Display.

Die zuvor genannten Anforderungen sind technologisch nur sehr schwer zu erreichen. Ein Problem ist, dass hohe Bremsmomente in der Regel entsprechende Reibdurchmesser und Baugrößen benötigen, was wiederum das Grundmoment (auch als Leerlaufmoment bezeichnet) unvorteilhaft erhöht. Ein hohes Grundmoment steht jedoch der Anforderung des leichtgängigen Lenkens entgegen.

So sind beispielsweise Reibkupplungen bekannt, welche ein hohes maximales Bremsmoment bieten. Allerdings verursachen die zum Erzielen des Bremsmomentes benötigten Reibflächen unbestromt ungünstig hohe Grundreibungen, beispielsweise ein Newtonmeter Grundreibung bei 20 Newtonmeter maximalem Bremsmoment.

Des Weiteren sind Lenksysteme mit einem Elektromotor bekannt geworden, welcher entweder direkt oder über ein Untersetzungsgetriebe oder (Zahn-) Riemen mit dem Lenkrad gekoppelt ist. Solche direkt angebrachten Elektromotoren erzeugen beispielsweise aktive Bremsmomente (Nennmomente) bis acht Newtonmeter und kurzzeitig passive Bremsmomente bis 25 Newtonmeter. Wegen des entsprechend hohen Bremsmoments sind solche Elektromotoren jedoch groß und schwer sowie träge (Massenträgheitsmoment) und oft auch teuer. Aufgrund des großen Arbeitsbereiches ist die Regelbarkeit bei niedrigen Bremsmomenten verbesserungswürdig.

Über z.B. Riementriebe übersetzte und parallel zum Lenkstrang angebrachte Elektromotoren (indirekte Anordnung) sollten vorteilhafter gestaltet werden, der zusätzliche Riementrieb, Riemenräder, Halterungen benötigen Platz und verursachen Nachgiebigkeiten, Spiel und Zusatzkosten.

Da Elektromotoren im Lenksystem das hohe Bremsmoment primär bei niederen Drehzahlen erbringen müssen, ist auch der Strombedarf bzw. Leistungsbedarf unvorteilhaft hoch. Zugleich haben Elektromotoren bei niederen Drehzahlen bzw. im Stillstand (zum Beispiel zur Bereitstellung eines Endanschlags) einen sehr ungünstigen Wirkungsgrad und erhitzen deshalb oft sehr schnell. Das verschlechtert wiederum den Wirkungsgrad, da der Spulenwiderstand zunimmt. Dadurch erhitzt er noch schneller, alles schaukelt sich so auf, der Leistungsbedarf steigt schnell und sehr stark.

Eine Steer-by-Wire-Lenkung für ein Kraftfahrzeug mit einem Elektromotor und einer magnetorheologischen Bremse ist aus der DE 10 221 241 A1 bekannt.

Magnetorheologische Bremsen mit magnetorheologischen Flüssigkeiten sind aus dem Stand der Technik bekannt, z.B. die MRF Bremse der Firma Lord Corporation in verschiedenen Baugrößen (5 Nm, 12 Nm, 20 Nm): https://www.lord.com/products-andsolutions/steer-by-wire-tactile-feedback-device. Diese werden u.a. auch als "Steer-by-Wire Tactile Feedback" eingesetzt. Diese Bremsen funktionieren an sich. Ein Nachteil dieser MRF Bremsen ist aber deren relativ hohe Grundreibung (Grundmoment) in Relation zum Maximalmoment (Arbeitsbereich). Der Arbeitsbereich der 5 Nm Bremse ist laut Webseite/Spezifikation der Firma Lord 0,5 bis 5 Nm (Faktor 10), bei der 12 Nm Bremse liegt der Arbeitsbereich zwischen 1 Nm und 12 Nm (Faktor 12) und bei der 20 Nm Bremse liegt der Arbeitsbereich zwischen 1 Nm und 20 Nm (Faktor 20). Dieser relativ geringe Arbeitsbereich ist für viele Anwendungen nicht ausreichend, weshalb diese Serienprodukte primär bei grobmotorischen Anwendungen im Einsatz sind (u.a. Bedienung meist mit Handschuhen, wie in der Industrie, bei Landmaschinen, an Gabelstaplern...).

Die Dokumente DE 10 2017 111031 A1 und DE 10 2004 009906 B3 dürfen als weiterer Stand der Technik zitiert werden.

Für (überwiegend) feinmotorische Anwendungen wie das Lenken eines Personenkraftwagens ist ein wesentlich niederes Grundmoment bei gleichzeitig höherem Maximalmoment vorteilhaft, also einen erheblich größeren Arbeitsbereich. Besonders das hohe Grundmoment führt z.B. beim Lenken rasch zum Ermüden bzw. fühlt sich nicht komfortabel an. Die bekannten MRF Bremsen lassen einen großen Arbeitsbereich aber nicht zu, da die Reibflächen zu groß sind. Kleinere Reibflächen würden zwar das Grundmoment verringern, aber damit würde auch das Maximalmoment kleiner werden, was gerade bei Lenksystemen ungünstig wäre.

Demgegenüber ist es die Aufgabe der vorliegenden Erfindung, eine verbesserte Lenkeinrichtung zur Verfügung zu stellen. Insbesondere soll die Lenkeinrichtung die zuvor diskutierten Anforderungen möglichst weitgehend erfüllen und vorzugsweise zugleich eine zuverlässige und sichere Funktion bieten sowie wirtschaftlich herstellbar sein.

Diese Aufgabe wird gelöst durch eine Lenkeinrichtung mit den Merkmalen des Anspruchs 1. Das erfindungsgemäße Verfahren ist Gegenstand von Anspruch 18. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Die erfindungsgemäße Lenkeinrichtung dient zum Steuern (Lenken) eines Fahrzeugs mittels einer (wenigstens teilweise manuell) bewegbaren Lenkeinheit. Eine Bewegung der Lenkeinheit ist mittels wenigstens einer magnetorheologischen Bremseinrichtung bremsbar (insbesondere dämpfbar). Die Bremseinrichtung umfasst einen feststehenden Halter und wenigstens zwei Bremskomponenten.

Wenigstens eine der wenigstens zwei Bremskomponenten ist durch die Lenkeinheit drehbar. Insbesondere ist die Bremskomponente drehbar an die Lenkeinheit gekoppelt. Wenigstens eine andere der wenigstens zwei Bremskomponenten ist mit dem Halter drehfest verbunden. Die beiden Bremskomponenten sind relativ zueinander kontinuierlich um eine Rotationsachse drehbar. Eine erste Bremskomponente erstreckt sich entlang der Rotationsachse. Das bedeutet, dass sich die erste Bremskomponente wenigstens abschnittsweise entlang der Rotationsachse erstreckt. Oder dass sich wenigstens ein Abschnitt der ersten Bremskomponente oder vorzugsweise ein wesentlicher Teil der ersten Bremskomponente entlang der Rotationsachse erstreckt. Die erste Bremskomponente umfasst einen Kern aus einem magnetisch leitfähigen Material. Die zweite Bremskomponente umfasst ein sich um die erste Bremskomponente herum (insbesondere in radialer und/oder axialer Richtung) erstreckendes und hohl ausgebildetes Mantelteil. Zwischen der ersten und der zweiten Bremskomponente ist wenigstens ein umlaufender und wenigstens zum Teil mit einem magnetorheologischen Medium gefüllter Spalt ausgebildet. Dabei umfasst der Spalt wenigstens zwei unterschiedliche Bremsspaltabschnitte. Die Bremsspaltabschnitte sind insbesondere radial ausgebildet. Zusätzlich oder alternativ können die Bremsspaltabschnitte auch axial ausgebildet sein. Dabei ist in bzw. an einem ersten Bremsspaltabschnitt eine Scheibenkontur zwischen dem Mantelteil und dem Kern ausgebildet. An bzw. in einem zweiten Bremsspaltabschnitt ist eine Mehrzahl von Wälzkörpern auf dem Umfang des Kerns angeordnet.

Die erfindungsgemäße Lenkeinrichtung bietet viele Vorteile. Einen erheblichen Vorteil bietet die Kombination der beiden unterschiedlichen Bremsspaltabschnitte. So können mit dem Bremsspaltabschnitt mit der Scheibenkontur niedrige und zugleich besonders präzise regelbare Bremsmomente erzeugt werden. Mit dem Bremsspaltabschnitt mit den Wälzkörpern können besonders hohe Bremsmomente, beispielsweise für Endanschläge oder die Ein-/Ausstiegshilfe, erzeugt werden. Ein besonderer Vorteil ist, dass beide Bremsabschnitte ein besonders geringes Grundmoment aufweisen. Ein weiterer Vorteil ist, dass eine solche Bremseinrichtung insgesamt nur wenig Bauraum benötigt und konstruktiv unaufwendig umgesetzt und wirtschaftlich hergestellt werden kann. Zudem ist die erfindungsgemäße Lenkeinrichtung besonders zuverlässig, da die Bremsspaltabschnitte eine Redundanz ermöglichen.

Der Einsatz der Lenkeinrichtung ist bei Kraftfahrzeugen (z. B. Pkws; ON-Highway Fahrzeuge), Luftfahrzeugen, Flugzeugen, Schiffen, Booten, in der Landtechnik bei zum Beispiel Traktoren oder Mähdrescher, Erntemaschinen und sonstigen Feldmaschinen für die Landwirtschaft möglich (OFF-Highway Fahrzeuge). Der Einsatz ist auch bei Baumaschinen und zum Beispiel Gabelstaplern oder ähnlichen Maschinen oder auch bei Simulatoren zur Simulation einer Fahrzeugsteuerung möglich (Gaming; Sim Race; Computerpheripherie...). Die Lenkeinrichtung ist insbesondere auch für wenigstens teilweise autonom fahrende Fahrzeuge einsetzbar.

Die Lenkeinheit kann beispielsweise als ein Lenkrad, ein Lenker bzw. Lenkstange, Steuerknüppel, Steuerhorn, Steuerpedal, Steuerhebel oder als Joystick oder auch als ein Bedienrad ausgebildet sein. Möglich sind auch andere Bauarten von bewegbaren Lenkeinheiten zum Lenken von Fahrzeugen. Die Bewegung der Lenkeinheit ist insbesondere eine Drehbewegung. Insbesondere ist die Lenkeinheit in wenigstens zwei Drehrichtungen bewegbar. Die Bewegung der Lenkeinheit kann auch eine andere Art von Bewegung sein. Die Lenkeinrichtung kann wenigstens eine Getriebeeinrichtung umfassen, welche dazu geeignet und ausgebildet ist, die Bewegung der Lenkeinheit in eine Drehbewegung einer der Komponenten der Bremseinrichtung umzusetzen.

In allen Ausgestaltungen ist es bevorzugt, dass das Bremsmoment in Echtzeit einstellbar ist.

Insbesondere umfasst die Lenkeinrichtung wenigstens eine Aktuatoreinrichtung zur Umsetzung einer mit der Lenkeinheit ausgeführten Lenkbewegung in eine Fahrzeugbewegung. Insbesondere sind die Lenkeinheit und die Aktuatoreinrichtung nur elektrisch und/oder nur elektromagnetisch wirkverbunden. Insbesondere sind die Lenkeinheit und die Aktuatoreinrichtung (im Normalbetrieb) nicht mechanisch gekoppelt. Im Notfallbetrieb kann eine mechanische Kopplung vorgesehen sein. Insbesondere ist die Lenkeinrichtung eine Steer-by-Wire-Lenkung. Darunter fallen auch Steer-by-wire Lenkungen, welche in besonderen Situationen, wie bei einem Notfall oder einer Fail Safe Situation, den Lenkstrang einkuppeln, also insbesondere eine mechanische Koppelung zwischen Lenkeinheit bzw. Fahrer und Rad gegeben ist. In einer solchen Ausgestaltung bietet die Erfindung besonders viele Vorteile.

Möglich ist aber auch, dass die Lenkeinrichtung als eine mechanische Lenkung und vorzugsweise als eine Servolenkung ausgebildet ist. Auch bei einer solchen Lenkung können die zwei unterschiedlichen Bremsspaltabschnitte vorteilhaft eingesetzt werden.

Die Bremseinrichtung weist bei einer aktiven Beeinflussung des magnetorheologischen Mediums insbesondere ein Bremsmoment auf. Die Bremseinrichtung weist bei einer inaktiven Beeinflussung des magnetorheologischen Mediums insbesondere ein Grundmoment auf. Dabei ist das Grundmoment wenigstens um den Faktor 50 und vorzugsweise wenigstens um den Faktor 90 und besonders bevorzugt wenigstens um den Faktor 100 geringer als ein mit der Bremseinrichtung bereitstellbares maximales Bremsmoment. Das bietet einen besonders großen Arbeitsbereich. Das bietet ein besonders vorteilhaftes Lenkverhalten und kann mit der hier vorgestellten Bremseinrichtung besonders gut umgesetzt werden. Für den Bewegungswiderstand der Lenkeinheit ergibt sich insbesondere ein Drehmoment, welches wenigstens aus dem Bremsmoment und dem Grundmoment zusammengesetzt ist.

Es ist möglich und vorteilhaft, dass die Bremseinrichtung bei einer inaktiven Beeinflussung des magnetorheologischen Mediums ein Grundmoment von maximal 0,5 Newtonmeter und vorzugsweise maximal 0,25 Newtonmeter und besonders bevorzugt maximal 0,1 Newtonmeter aufweist.

Insbesondere ist mit der Bremseinrichtung durch eine aktive Beeinflussung des magnetorheologischen Mediums ein maximales Bremsmoment von wenigstens 25 Newtonmeter und vorzugsweise wenigstens 45 Newtonmeter und besonders bevorzugt wenigstens 50 Newtonmeter erzeugbar.

In allen Ausgestaltungen ist es bevorzugt und vorteilhaft, dass mit dem zweiten Bremsspaltabschnitt ein wenigstens doppelt so hohes Bremsmoment wie mit dem ersten Bremsspaltabschnitt erzeugbar ist. Insbesondere ist mit dem zweiten Bremsspaltabschnitt ein wenigstens dreimal und vorzugsweise wenigstens fünfmal und besonders bevorzugt wenigstens zehn Mal so hohes Bremsmoment wie mit dem ersten Bremsspaltabschnitt erzeugbar.

Mit dem ersten Bremsspaltabschnitt ist insbesondere nur ein Teil und vorzugsweise weniger als die Hälfte des maximalen Bremsmoments erzeugbar. Insbesondere ist mit dem ersten Bremsspaltabschnitt weniger als ein Viertel und vorzugsweise weniger als ein Achtel des maximalen Bremsmoments erzeugbar. Insbesondere ist mit dem ersten Bremsspaltabschnitt ein Bremsmoment erzeugbar, welches zwischen null Newtonmeter und zehn Newtonmeter und vorzugsweise zwischen null Newtonmeter und acht Newtonmeter und besonders bevorzugt zwischen null Newtonmeter und fünf Newtonmeter liegt. Solche Bremsmomente können mit dem ersten Bremsspaltabschnitt mit besonders hoher Regelgüte eingestellt werden.

Mit dem zweiten Bremsspaltabschnitt ist insbesondere ein überwiegender Teil und vorzugsweise wenigstens zwei Drittel des maximalen Bremsmoments erzeugbar. Insbesondere sind mit dem zweiten Bremsspaltabschnitt wenigstens drei Viertel oder sogar wenigstens 90 % des maximalen Bremsmoments erzeugbar. Es ist möglich, dass das maximale Bremsmoment allein mit dem zweiten Bremsspaltabschnitt erzeugbar ist. Es ist möglich, dass zeitgleich mit dem zweiten Bremsspaltabschnitt auch der erste Bremsspaltabschnitt zur Unterstützung aktiviert wird. Bei solchen Bremsmomenten kann der zweite Bremsspaltabschnitt besonders vorteilhaft eingesetzt werden, da hierbei dessen Eigenschaften in Bezug auf die Regelbarkeit keinen Nachteil darstellen.

Es ist bevorzugt und vorteilhaft, dass ein Bremsmoment mit dem ersten Bremsspaltabschnitt mit einer höheren Auflösung als mit dem zweiten Bremsspaltabschnitt einstellbar ist. Vorzugsweise weist der erste Bremsspaltabschnitt eine wenigstens um den Faktor zehn höhere Auflösung als der zweite Bremsspaltabschnitt auf.

Insbesondere ist mit dem ersten Bremsspaltabschnitt ein Bremsmoment mit einer Auflösung von wenigstens 0,5 Newtonmeter und vorzugsweise wenigstens 0,25 Newtonmeter und besonders bevorzugt wenigstens 0,15 Newtonmeter erzeugbar.

In allen Ausgestaltungen ist es bevorzugt und vorteilhaft, dass dem ersten Bremsspaltabschnitt eine erste elektrische Spule und dem zweiten Bremsspaltabschnitt eine zweite elektrische Spule zugeordnet sind. Insbesondere sind die Spulen separat ansteuerbar. Insbesondere dienen die Spulen zu Erzeugung eines (Magnet- ) Feldes zur Beeinflussung des magnetorheologischen Mediums. Insbesondere sind die Spulen durch das (nachfolgend beschriebene) Lenkungssteuergerät (insbesondere intelligent) ansteuerbar. Eine solche Ausgestaltung ermöglicht ein besonders feinfühliges Lenkverhalten und bietet zudem eine zuverlässige Redundanz.

Möglich ist auch, dass die wenigstens zwei Bremsspaltabschnitte durch eine gemeinsame Spule versorgt werden. Dann ist beispielsweise zwischen dem Mantelteil und dem Kern wenigstens eine um die Rotationsachse herum gewickelte und den Kern umgebende elektrische Spule vorgesehen.

In Sonder-/Grenzfällen bzw. Notfällen kann der Elektromotor dazu geschaltet werden und somit das maximale Bremsmoment zusätzlich erhöhen.

Die Lenkeinrichtung umfasst insbesondere wenigstens ein Lenkungssteuergerät zur Ansteuerung der Bremseinrichtung. Insbesondere sind mit dem Lenkungssteuergerät die Bremsmomente der wenigstens zwei Bremsspaltabschnitte insbesondere unabhängig voneinander einstellbar. Insbesondere dient das Lenkungssteuergerät zur Ansteuerung der Bremseinrichtung in Abhängigkeit einer Position der Lenkeinheit und/oder in Abhängigkeit eines Bewegungsparameters der Lenkeinheit und/oder in Abhängigkeit eines Betriebszustandes des Fahrzeugs und/oder in Abhängigkeit von "Daten".

"Daten" können z. B. sein: Fahrzeugdaten wie Geschwindigkeit, Querbeschleunigung, Raumlage, Bremswerte, GPS Position, Umfelderkennung, Daten/Position von anderen (sich in der Umgebung des Fahrzeuges befindlichen) Fahrzeugen, Anhänger ja/nein, Beladung, Passagierdaten (Größe, Gewicht, Bekleidung, Sitzposition, Analysedaten aufgrund der Auswertung dieser Daten mit z.B. künstlicher Intelligenz und Vorschlägen; Geräusche, Gesten), externe Daten (z.B. das Wohnhaus des Fahrers schickt Daten an das Auto; Parkhausdaten in einem Parkhaus...).

Das Lenkverhalten einer Person im Winter mit einem dicken Mantel ist anders als im Sommer mit dünner Kleidung. Der dicke Mantel schränkt die Bewegungsfreiheit ein führt deswegen zu einem anderen Lenkverhalten. Erkennt die Steuerelektronik aufgrund von "Daten" dies, so kann das Verhalten angepasst werden, wie z.B.: Ein schnelles Anreißen der Lenkung zum Ausweichen ist mit einem dicken und eng sitzenden Mantel schwieriger (körperlich schwergängiger) und in der Realität langsamer. Hier kann insofern intelligent gegengewirkt werden, indem das Verhältnis von Lenkwinkel am Lenkrad zu Lenkwinkel am Rad oder den Rädern erhöht wird, sodass der Ausweichvorgang trotzdem schnell geht. Zudem kann die notwendige Lenkungsbetätigungskraft (Unterstützung) reduziert werden, da der schwere Mantel wie ein Dämpfer wirkt.

Wird aufgrund der "Daten" oder/und der Nahfelderkennung z.B. erkannt, dass der Fahrer ermüdet und nachlässig lenkt, kann dies intelligent kompensiert werden. Der Fahrer kann hierbei gewarnt werden (Rippel bzw. Vibrationen) oder die Lenkeinheit setzt den Fahrerbefehl (Drehen am Lenkrad) mithilfe von z.B. künstlicher Intelligenz anders um, d.h. die Bewegung des Lenkrades geht nicht 1:1 in die Radverstellung ein. Auf einer geraden Straße (Highway) kann so ein "Schlängeln" und Aufschaukeln des Fahrzeuges verhindert werden.

Andererseits kann eine solche intelligente Elektronik das Ermüden aufgrund der Datenanalyse (Lenkbewegungen, Gesichtserkennung, komisches Bewegungsmuster des Fahrers Temperatur, Atemgeräusche...) erkennen und eingreifen (Warnung; Reduktion der Geschwindigkeit bis zum Stillstand; autonomes Parken...). Dies ist besonders im Falle von z.B. einem Schwindelanfall, Herzinfarkt oder Ähnlichem vom Vorteil.

Ein Lenken bzw. Bewegen des Fahrzeuges kann auch verhindert werden, wenn die Datenanalyse erkennt, dass ein Kind am Steuer sitzt (Kraft, Umgreifen, Nahfelderkennung). Im Zweifelsfall kann das Lenkmoment kurzeitig erhöht werden, um dadurch zu erkennen, ob der Fahrer genügend Kraft bei der Inbetriebnahme des Fahrzeuges hat, was bei Kindern nicht der Fall ist.

Das Fahrzeug (Maschinenlernen/Künstliche Intelligenz/GPS Daten...) weiß z.B., dass jetzt gleich ein Schlagloch oder eine starke Spurrille kommt, bei der der Fahrer aufgrund dieser (Aufbaubewegung, Ziehen im Lenkrad...) das Fahrzeug unruhig oder nicht richtig lenkt (Spurrille zieht zu stark zum Rand...). Hier wirkt die intelligente Bremseinheit dagegen und "beruhigt" diese unnötige bzw. fahrdynamisch schlechte Lenkbewegung so, dass das Fahrziel gut, sicher und komfortabel erreicht wird.

Ähnlich auch bei Schnee, rutschigen Untergründe, Steinen usw. Die Lenkung stellt sich insbesondere darauf ein und das aktive und passive Moment wird entsprechend angepasst. Rutscht im Winter ein Fahrzeug bei der Kurvenfahrt (z.B. Untersteuern) wegen rutschigem Untergrund (Schnee, Eis...), überlenkt der Fahrer meist aus Panik. Sobald das Fahrzeug dann wieder Haftung (Grip) hat biegt es wegen dem Lenken zu stark ab, was zu Unfällen führt. Hier sollte das Lenkmoment erhöht werden bzw. dem Fahrer ein (haptisches Feedback, z.B. in Form von einem Rippel) gegeben werden, dass er überlenkt.

Umgekehrt verhält es sich, wenn man driftet (z.B. auch wieder im Winter bei Schnee und Eis). Hier lenkt der ungeübte Fahrer meist zu wenig und "verliert" so das Fahrzeug, es schleudert. Hier kann die Lenkung sehr leichtgängig gemacht werden, was ein Überlenken fördert.

Manche Personen halten das Lenkrad gerne ganz oben (zwischen 10 und 2 Uhr). Dies führt zu mehr Lenkwinkeländerungen bei Erschütterungen bzw. das Lenkrad ist in dieser Körperhaltung schwerer ruhig zu halten bzw. kann sich auch aufschwingen (auch als Motion Sickness bezeichnet). Sieht die Innenraumüberwachung diese Lenkradhaltung, so kann das Moment insbesondere ein wenig erhöht werden, was zu ruhigerem Fahren führt.

Kleine Personen haben auch eine ganz andere Lenkradhaltung als große Personen und auch andere Hebelabstände aufgrund der unterschiedlich langen Gliedmaßen. Kürzere Arme erfordern ein öfterem Nachgreifen bei größeren Lenkradbewegungen, was zu unruhigerem Lenkmanövern führt. Wird das Umgreifen oder nachteilige kinematische Armstellungen erkannt ("Daten", Nahfelderkennung; Analyse des Drehwinkels..), so kann das Steuergerät bzw. die Künstliche Intelligenz diesen Vorgang insbesondere "beruhigen", d.h. harmonischer machen.

Dies kann auch von Vorteil sein, wenn der Fahrer schon lange unterwegs ist.

Ein haptisches Feedback beim Wechseln einer Fahrspur kann durchgeführt werden. Werden 2 Fahrspuren gewechselt, erfolgt ein anderes Feedback. Alles in Kombination mit den "Daten" (z.B. Navigationssystem, Umfelderkennung...). Die Lenkung gibt insbesondere ein entsprechendes Feedback.

Vorteilhaft ist die Erfindung auch in folgenden Situationen: Stellplätze oder Parkflächen in Städten oder Parkhäusern sind teuer und sollten bestmöglich genutzt werden. Die Parkflächen könnten unterschiedlich große sein und beim Einfahren ins Parkahaus dem Fahrzeug via Datenpaket (Funk, WLAN, 5G...) ideal zugeordnet werden. Beim Einparken sollte "das intelligente Parkhaus" den Einparkvorgang unterstützen, d.h. die ideale Parkposition vorgeben und an das parkende Fahrzeug übermitteln. Die intelligente Lenkung führt diese dann aus bzw. gibt Vorschläge, welche vom Fahrer dann akzeptiert und ausgeführt werden oder auch nicht (wenn z.B. ein vom Parkhaus nicht erkannter Gegenstand in der Parklücke ist). Das "intelligente Parkhaus" weiß hier auch und teilt es mit, ob das benachbarte Fahrzeug einen Beifahrer hatte oder nicht, also das eigene Fahrzeug dichter zu der Beifahrertür geparkt werden kann. Der Nutzer vom benachbarten Fahrzeug könnte auch hinterlegen und dem "Parkhaus" mitteilen, dass er mit einem Beifahrer zurück kommt. Wird ein Fahrzeug zeitlich lange abgestellt und dies dem intelligenten Parkhaus oder Parkraum mitgeteilt und das nebenan parkende zeitlich kürzer, so könnte es sogar dicht an die Fahrzeugtür geparkt werden, was wiederum viel Parkraumsparen würde. Bei Onlinekartenkauf z.B. in Flugplatzparkhäusern weiß man die Parkdauer jetzt schon genau.

Der Einparkvorgang mittels der Lenkeinrichtung und damit Abstand zum nächsten Fahrzeug könnte in vorteilhaften Ausgestaltungen auch an den notwendigen Türöffnungswinkel angepasst werden, damit der Fahrer oder die Fahrgäste einwandfrei ein- und aussteigen können. Das Fahrzeug weiß aufgrund der "Daten" den Öffnungswinkel bzw. die Körperabmessungen der Passagiere. Auch diese notwendigen Abstände kann das intelligente Parkhaus erfassen/erkennen und intelligent verteilen (nutzen).

Merkt die intelligente Lenkung aufgrund der "Daten", dass Flächen befahren werden, die nicht befahren werden sollten (z.B. Fußgängerzonen, Radwege, Sperrflächen, auf ein Gebäude zu..), so kann ein haptisches Feedback ausgegeben werden bis hin zum Eingriff (Gegenlenken; Stillstand des Fahrzeuges). Vorzugsweise wird aber immer zuerst ein warnendes Feedback ausgegeben und der Fahrer kann dieses auch überdrücken (wird also nicht bevormundet sondern meist nur gewarnt).

Insbesondere ist die Position der Lenkeinheit durch einen Drehwinkel beschreibbar (relativ- oder absolut beschreibbar). Der Bewegungsparameter umfasst insbesondere wenigstens eine Kenngröße aus einer Gruppe von Kenngrößen, umfassend: Geschwindigkeit, Winkelgeschwindigkeit, Drehmoment, Beschleunigung (negativ und positiv), Dauer. Beispielsweise kann so bei einer zu schnellen Lenkbewegung ein gezieltes Abbremsen erfolgen.

Zur Ansteuerung der Bremseinrichtung in Abhängigkeit der zuvor genannten Parameter ist insbesondere wenigstens eine Sensoreinrichtung zur Erfassung dieser Parameter vorgesehen. Insbesondere ist das Lenkungssteuergerät mit wenigstens einer solchen Sensoreinrichtung wirkverbunden. Die Position und/oder der Bewegungsparameter können an der Lenkeinheit und/oder an der Bremseinrichtung sensorisch erfassbar sein. Beispielsweise umfasst die Bremseinrichtung wenigstens eine Sensoreinrichtung zur Erfassung einer Relativposition der ersten Komponente zur zweiten Komponente.

Der Betriebszustand wird insbesondere durch wenigstens eine Kenngröße aus einer Gruppe von Kenngrößen definiert, umfassend: Fahrzeuggeschwindigkeit, Fahrzeugbeschleunigung (negativ und positiv), Räderstellung, Ruderstellung, Lenkungseinschlag, Beladungszustand, Benutzerprofil, Temperatur außen, Temperatur innen, Wetterbedingungen, Jahreszeit, Verkehrslage, Straßenzustand bzw. Geländezustand, Regelgrößen von Sicherheitssystemen bzw. Assistenzsystemen.

Das Lenkungssteuergerät ist vorzugsweise dazu geeignet und ausgebildet, in Abhängigkeit der Höhe eines einzustellenden Bremsmoments wenigstens einem Bremsspaltabschnitt der wenigstens zwei Bremsspaltabschnitte auszuwählen und wenigstens damit die Bewegung der Lenkeinheit zu bremsen. Insbesondere berücksichtigt das Lenkungssteuergerät, welches Bremsmoment mit dem jeweiligen Bremsspaltabschnitt maximal erzeugt werden kann. Insbesondere ist den wenigstens zwei Bremsspaltabschnitten jeweils wenigstens ein Wertebereich des einstellbaren Bremsmoments zugeordnet. Je nachdem, in welchem Wertebereich das einzustellende Bremsmoment liegt, kann so der passende Bremsspaltabschnitt ausgewählt werden.

Das Lenkungssteuergerät ist vorzugsweise dazu geeignet und ausgebildet, ein Bremsmoment zum Bremsen der Bewegung der Lenkeinheit wenigstens überwiegend und vorzugsweise nur mit dem ersten Bremsspaltabschnitt zu erzeugen, wenn die Fahrzeuggeschwindigkeit oberhalb eines Grenzwerts liegt (und ein Normalbetrieb des Fahrzeugs vorliegt). Ein solcher Grenzwert liegt beispielsweise bei 15 km/h oder bei 25 km/h. Bei solchen oder höheren Geschwindigkeiten müssen die Bremsmomente mit besonders hoher Auflösung eingestellt werden, um das Lenkverhalten nicht negativ zu beeinflussen.

Das Lenkungssteuergerät ist insbesondere dazu geeignet und ausgebildet, eine Bewegbarkeit der Lenkeinheit zu blockieren und das dazu notwendige Bremsmoment überwiegend und vorzugsweise nur mit dem zweiten Bremsspaltabschnitt zu erzeugen. Insbesondere ist die Bewegbarkeit der Lenkeinheit mittels der Bremseinrichtung blockierbar. Insbesondere kann dadurch ein Lenkradschloss bereitgestellt werden. Insbesondere kann dadurch eine Abstützmöglichkeit an der Lenkeinheit bereitgestellt werden. Beispielsweise kann die blockierte Lenkeinheit zum Festhalten beim Aussteigen und/oder Einsteigen benutzbar sein.

Insbesondere ist das Lenkungssteuergerät dazu geeignet und ausgebildet, einen Endanschlag für die Bewegbarkeit der Lenkeinheit wenigstens überwiegend und vorzugsweise nur mit dem zweiten Bremsspaltabschnitt zu erzeugen. Ein solcher Endanschlag wird beispielsweise dann erzeugt, wenn die Räder oder ein Ruder an einem Ende ihres bestimmungsgemäßen Bewegungsweges angekommen sind.

Die Lenkeinrichtung kann z.B. ein Lenkrad umfassen. Fahrzeuge haben meist verschiedene Funktionen im Lenkrad eingebaut, z.B. Tasten, Drehknöpfe und -räder für die Bedienung von Bordcomputer etc., aber auch Displays, Lenkradheizungen usw. die alle Strom benötigen und Signale erhalten und senden müssen. Die elektrische Anbindung kann z.B. über Reibkontakte, induktiv, Funk oder eine Wickelfeder geschehen.

Es ist vorteilhaft und bevorzugt, dass das Lenkungssteuergerät dazu geeignet und ausgebildet ist, in Abhängigkeit eines Fahrassistenzsystems eine Bewegbarkeit der Lenkeinheit zu bremsen oder sogar zu blockieren. Dadurch können kritische Lenkbewegungen verhindert werden. Insbesondere wählt das Lenkungssteuergerät dazu wenigstens einen Bremsspaltabschnitt der wenigstens zwei Bremsspaltabschnitte aus und steuert diesen an. Beispielsweise werden für ein feinfühliges Bremsen der erste Bremsspaltabschnitt und für ein Blockieren der zweite Bremsspaltabschnitt ausgewählt.

Als Fahrassistenzsystem kann beispielsweise ein Spurhaltesystem vorgesehen sein. So kann durch Bremsen der Lenkeinheit das Verlassen einer Spur verhindert oder dem Fahrer warnend hingewiesen (z.B. Rippel) werden. Zudem kann, wenn das Fahrassistenzsystem eine kritische Fahrsituation und beispielsweise ein Ausbrechen des Fahrzeugs erkennt, eine hektische Lenkbewegung und/oder ein Übersteuern durch gezieltes Bremsen der Lenkeinheit verhindert werden.

Das Fahrassistenzsystem kann auch eine Einparkhilfe umfassen. Dann kann durch das Bremsen oder Blockieren der Lenkeinheit beispielsweise ein Kontakt der Räder mit einem Hindernis (Bordsteinkante) verhindert werden. Insbesondere umfassen das Lenkungssteuergerät und/oder das Fahrassistenzsystem wenigstens eine Sensoreinrichtung zur Erkennung solcher Situationen (Surround View; Bilderkennung; Radar, Lidar...). Eine solche Sensoreinrichtung kann z. B. eine Umfeldsensorik und/oder ein GPS-System umfassen.

Es ist möglich, dass das Lenkungssteuergerät dazu geeignet und ausgebildet ist, eine Benutzereigenschaft für die Einstellung des Bremsmoments zu berücksichtigen. Beispielsweise kann die Benutzereigenschaft eine Sitzposition, Benutzergröße, Benutzergewicht, Benutzerkleidung und/oder Fahrtüchtigkeit des Benutzers umfassen. Die Benutzereigenschaft kann in einem Benutzerprofil hinterlegt sein und/oder sensorisch erfassbar sein. Beispielsweise sind dazu eine Nahfelderkennung und/oder eine Innenkamera (z.B. mit Bild-/Gesichtserkennung) vorgesehen.

Das Lenkungssteuergerät ist insbesondere dazu geeignet und ausgebildet, dass Bremsmoment auch in Abhängigkeit davon einzustellen, an welcher Position die Lenkeinheit gehalten wird. So kann ein ungünstiges Festhalten der Lenkeinheit durch ein höheres Bremsmoment kompensiert werden, damit zum Beispiel bei Schlaglöchern keine unerwünschten Lenkbewegungen auftreten.

In allen Ausgestaltungen ist es bevorzugt und vorteilhaft, dass das Lenkungssteuergerät dazu geeignet und ausgebildet ist, eine an der Lenkeinheit haptisch wahrnehmbare Rückmeldung zu erzeugen. Die Rückmeldung umfasst insbesondere eine definierte Abfolge von Bremsmomenten. Beispielsweise kann eine solche Rückmeldung als eine Vibration an der Lenkeinheit wahrgenommen werden. Es kann auch ein Rattern und/oder Ruckeln (Rippel) wahrnehmbar sein. Es ist möglich, dass die Bremsmomente mit einer einstellbaren Frequenz erzeugbar sind. Insbesondere ist eine solche Rückmeldung in Abhängigkeit der Position und/oder des Bewegungsparameters der Lenkeinheit und/oder eines Betriebszustands des Fahrzeugs und/oder der Benutzereigenschaft erzeugbar. Beispielsweise kann die Rückmeldung zur Warnung bei gefährlichen Manövern oder zum Aufwecken bei Müdigkeit dienen. Die Rückmeldung kann auch als ein Signal für einen Spurwechsel dienen.

In allen Ausgestaltungen ist bevorzugt, dass das Lenkungssteuergerät dazu geeignet und ausgebildet ist, ein Benutzerverhalten mittels wenigstens eines Algorithmus des maschinellen Lernens (auch als künstliche Intelligenz bezeichnet) zu ermitteln und bei der Einstellung des Bremsmoments zu berücksichtigen. Dazu werden insbesondere fortlaufend Daten registriert und ausgewertet. So kann beispielsweise die Bewegung der Lenkeinheit in Abhängigkeit einer vorhandenen Muskelkraft oder der Müdigkeit oder des Fahrverhaltens gedämpft werden. Die Bilderkennung kann dies unterstützen. Erkennt diese ein verzerrtes Gesicht (bestimmte Geste) beim z.B. Parken, so kann die Unterstützungskraft erhöht werden. Möglich ist auch, dass alterungsbedingte Veränderungen der Lenkeinrichtung oder anderer Teile des Fahrzeugs berücksichtigt werden.

Das magnetorheologische Medium umfasst vorzugsweise wenigstens ein metallisches Pulver. Insbesondere weist das metallische Pulver einen Volumenanteil von wenigstens 50 % und vorzugsweise wenigstens 60 % oder auch wenigstens 70 % auf. Durch den Einsatz eines solchen Mediums kann ein besonders geringes Grundmoment erzielt werden. Zugleich kann aufgrund des hohen Volumenanteils ein besonders hohes maximales Bremsmoment erzielt werden. Zudem kann ein solches Medium bei den für die Lenkeinrichtung zu erwartenden Temperaturen mit gleich bleibenden Eigenschaften eingesetzt werden. Das Pulver ist insbesondere in einem gasförmigen Trägermedium und beispielsweise Luft aufgenommen.

Das metallische Pulver ist vorzugsweise als Carbonyleisenpulver (reines Eisen) ausgebildet oder umfasst wenigstens ein solches. Möglich sind auch andere magnetorheologische ansprechbare Pulver.

Besonders bevorzugt ist das metallische Pulver mit einer Beschichtung ausgestattet.

Die Lenkeinrichtung kann wenigstens eine Remanenzeinrichtung und/oder wenigstens eine Permanentmagneteinheit umfassen, welche dazu geeignet und ausgebildet ist, auch ohne Zufuhr von elektrischem Strom ein Bremsmoment mit wenigstens einem der wenigstens zwei Bremsspaltabschnitte aufrechtzuerhalten. Die Remanenzeinrichtung ist insbesondere mit dem Lenkungssteuergerät wirkverbunden. Insbesondere wird die Remanenzeinrichtung durch wenigstens eine der Spulen bereitgestellt.

Die Lenkeinrichtung kann wenigstens eine Sicherheitseinrichtung umfassen. Die Sicherheitseinrichtung ist insbesondere dazu geeignet und ausgebildet, das magnetorheologische Medium wenigstens teilweise aus dem Spalt zu entfernen. Insbesondere kann die Sicherheitseinrichtung das Medium wenigstens so weit entfernen, dass die Lenkeinheit im Wesentlichen frei bewegbar ist. Insbesondere kann die Sicherheitseinrichtung dass Bremsmoment und/oder das Grundmoment beseitigen. Beispielsweise wird das magnetorheologische Medium mittels Überdruck und/oder Unterdruck aus dem Spalt entfernt. Die Sicherheitseinrichtung kann wenigstens einen Druckbehälter und/oder eine Sprengkapsel oder dergleichen umfassen. Eine solche Sicherheitseinrichtung dient bei einer Störung der Bremseinrichtung als Notfallsystem (sogenannter Fail-Safe-Mechanismus.)

In allen Ausgestaltungen ist es besonders bevorzugt, dass die Bremseinrichtung, insbesondere die erste und/oder zweite Komponente und/oder der Spalt, einen maximalen Durchmesser von weniger als 100 mm (insbesondere bei einem maximalen Bremsmoment von wenigstens 25 Nm) aufweist. Dadurch kann die Bremseinrichtung besonders Bauraum sparend (z.B. im Armaturenbrett) untergebracht werden. Die hier vorgestellte Bremseinrichtung eignet sich besonders gut für einen solchen maximalen Durchmesser.

In allen Ausgestaltungen ist es bevorzugt, dass die Lenkeinrichtung wenigstens eine Antriebseinrichtung zu Erzeugung eines Antriebsmoments für die aktive Bewegung der Lenkeinheit umfasst. Die Antriebseinrichtung dient insbesondere zur Erzeugung eines Antriebsmoments, gegen welches die Lenkeinheit manuell bewegt werden muss. Die Antriebseinrichtung kann auch zur Rückstellung der Lenkeinheit in eine Grundstellung dienen. Insbesondere umfasst die Antriebseinrichtung wenigstens einen elektrischen Antrieb und beispielsweise einen Elektromotor. Der Elektromotor kann auch ein Scheibenläufer, Wanderwellen- oder Axialflussmotor sein. Zusätzlich oder alternativ kann die Antriebseinrichtung auch wenigstens einen Kraftspeicher und beispielsweise eine Feder oder dergleichen umfassen.

Insbesondere beträgt das maximale Bremsmoment des zweiten Bremsspaltabschnitts wenigstens das Doppelte des maximalen Antriebsmoments der Antriebseinrichtung. Insbesondere ist mit der Antriebseinrichtung ein maximales Antriebsmoment von kleiner gleich zwölf Newtonmeter und vorzugsweise von kleiner gleich acht Newtonmeter erzeugbar.

Vorzugsweise kann die Bremseinrichtung bei einem Ausfall der Antriebseinrichtung ein Bremsmoment bereitstellen, welches wenigstens so hoch wie deren Antriebsmoment ist. Eine solche Lenkeinrichtung ist besonders sicher und zuverlässig, da die zwei Bremsspaltabschnitte zusammen mit der Möglichkeit, die Antriebseinrichtung zu kompensieren, eine dreifache Redundanz bieten.

Die hier vorgestellte Bremseinrichtung bietet in Kombination mit der Antriebseinrichtung den besonderen Vorteil, dass die Antriebseinrichtung und z. B. ein Elektromotor erheblich kleiner dimensioniert werden kann. Zudem können alle Momente, welche passiv aufgebracht werden sollen, von der Bremseinrichtung übernommen werden. Dadurch kann elektrische Energie eingespart werden, was vor allem bei Elektrofahrzeugen von großem Vorteil ist.

Der viel kleinere (schwächere) Elektromotor kann dem Fahrer im Falle einer Fehlfunktion (z.B. falsches Sensorsignal) auch das Lenkrad nicht mehr so leicht aus der Hand reißen. Zudem kann die magnetorheologische Bremseinheit gegenwirken und den Elektromotor überbremsen, wenn nicht plausible Zustände erkannt werden (der Elektromotor will stark einschlagen, obwohl das Fahrzeug mit hoher Geschwindigkeit auf einer Autobahn fährt).

Es ist bevorzugt und vorteilhaft, dass das Lenkungssteuergerät dazu geeignet und ausgebildet ist, Schwankungen im Antriebsmoment der Antriebseinrichtung wenigstens näherungsweise durch Anpassungen des Bremsmoments (insbesondere mit dem ersten Bremsspaltabschnitt) auszugleichen (auszuregeln). Insbesondere sind die Schwankungen soweit ausgleichbar, dass diese an der Lenkeinheit nicht mehr haptisch wahrnehmbar sind. Solche Schwankungen betreffen insbesondere Änderungen des Antriebsmoments über den Drehwinkel. Insbesondere ist das Lenkungssteuergerät dazu geeignet und ausgebildet, dass Antriebsmoment im Wesentlichen konstant über den Drehwinkel zu regeln.

Die Scheibenkontur kann wenigstens eine Sternkontur umfassen. Insbesondere ergibt sich in dem Bereich der Sternkontur eine veränderliche Spalthöhe über den Umfang des Bremsspaltabschnitts. Insbesondere sind an der Sternkontur Magnetfeldkonzentratoren angeordnet. Insbesondere ragen die Magnetfeldkonzentratoren radial in den Bremsspaltabschnitt hinein. Eine solche Sternkontur reduziert die Reibfläche zwischen den sich zueinander drehenden Teilen, wodurch das Grundmoment besonders gering ausfällt. Zugleich ergibt sich durch die Sternkontur eine sogenannte Haufenbildung für das magnetorheologische Medium, was besonders hohe Bremsmomente ermöglicht.

In einer besonders bevorzugten und vorteilhaften Ausgestaltung sind wenigstens drei Bremsspaltabschnitte vorgesehen. Insbesondere ist axial zwischen einem ersten Bremsspaltabschnitt und einem zweiten Bremsspaltabschnitt wenigstens ein dritter Bremsspaltabschnitt angeordnet. Insbesondere ist dem ersten Bremsspaltabschnitt wenigstens eine erste elektrische Spule und dem zweiten Bremsspaltabschnitt wenigstens eine separat ansteuerbare zweite elektrische Spule zugeordnet. Insbesondere sind dem dritten Bremsspaltabschnitt sowohl die erste als auch die zweite elektrische Spule zugeordnet.

Besonders bevorzugt sind wenigstens zwei unterschiedlich ausgebildete Bremsspaltabschnitte umfasst. Insbesondere sind der erste und der zweite Bremsspaltabschnitte verschieden voneinander ausgestaltet. Der erste und der zweite Bremsspaltabschnitte sind vorzugsweise in radialer (und/oder axialer) Richtung unterschiedlich ausgebildet und/oder sind funktional unterschiedlich ausgebildet.

Vorteilhaft ist auch die Redundanz, die ein solches System mit zwei elektrischen Spulen liefert. Wenn eine Spule ausfallen sollte, kann die zweite Spule immer noch ein Magnetfeld erzeugen, und somit über den Bremsspalt ein regelbares Drehmoment, wenngleich nicht mit der gleichen Güte. Für Anwendungen, bei denen eine hohe Ausfallsicherheit gefordert wird, ist das sehr vorteilhaft.

Insbesondere sind der erste Bremsspaltabschnitt und der zweite Bremsspaltabschnitt unterschiedlich ausgebildet. Es sind vorzugsweise wenigstens zwei (funktional) unterschiedliche (insbesondere radial und/oder axial) ausgebildete Bremsspaltabschnitte umfasst. Die Bremsspaltabschnitte sind vorzugsweise separat voneinander ausgebildet und in vorteilhaften Ausgestaltungen in axialer Richtung voneinander getrennt.

Vorzugsweise sind der erste Bremsspaltabschnitt und der zweite Bremsspaltabschnitt unterschiedlich weit (Spalthöhe) ausgebildet und/oder weisen unterschiedliche Querschnittsverläufe auf.

Besonders bevorzugt ist es auch, dass an dem ersten Bremsspaltabschnitt und dem zweiten Bremsspaltabschnitt wenigstens teilweise unterschiedliche Materialien eingesetzt sind. Insbesondere können sich in den Bereichen des ersten Bremsspaltabschnitts und des zweiten Bremsspaltabschnitts die eingesetzten Materialien an dem Kern und/oder dem Mantelteil wenigstens abschnittsweise unterscheiden. Es können gleiche oder unterschiedliche Materialien und Konstruktionen für die elektrischen Spulen verwendet werden.

Die zwei Bremsspaltabschnitte können verschiedene Laufspiele und Spaltabmessungen und/oder Spaltkonturen und Spaltverläufe (der sich zueinander bewegenden Teile) haben. Eine kleine Spalthöhe kann höhere Momente bringen, ist aber oft schwerer regelungstechnisch zu beherrschen. Ein große Spalthöhe verhält sich in der Regel gegenteilig (niederes Moment, aber insgesamt besser regelbar). Je nach Anforderungen kann somit die eine (erste) oder die andere (zweite) Spule bestromt werden. So benötigt z.B. ein Endstop (Anschlag, Barriere) meist sehr hohe Momente und wenig Regelungstechnik, da der Aktor quasi steht (Stillstand). Hier sind ein kleiner Spalt (Spalthöhe) oder mögliche Drehkörper/Walzen in dem Bremsspaltabschnitt effizient. Ein möglichst konstantes Bremsen bei höheren Drehzahlen benötigt regelmäßig hingegen eine hohe Regelgüte, hier ist eine größere Spalthöhe und/oder eine Scheiben-/Sternkontur an einem Bremsspaltabschnitt von Vorteil.

Die erste Bremskomponente definiert eine axiale Richtung. Insbesondere ist eine Symmetrieachse der ersten Bremskomponente die Rotationsachse. Vorzugsweise erstreckt sich der Kern der ersten Bremskomponente in der axialen Richtung, kann aber auch einen leichten Winkel zur axialen Richtung aufweisen.

Die Erfindung ermöglicht es, ein hohes Bremsmoment bei unterschiedlichen Drehzahlen bei einem kleinen Bauraum zu erzeugen. Das Magnetfeld durchtritt die zwei unterschiedlichen Bremsspaltabschnitte zwischen dem Kern und dem Mantelteil jeweils im Wesentlichen radial oder jedenfalls doch quer zu der Rotationsachse.

Die Wälzkörper am bzw. im zweiten Bremsspaltabschnitt dienen insbesondere als Magnetfeldkonzentratoren. Aufgrund der (als Magnetfeldkonzentratoren dienenden) Wälzkörper können sich zwischen den einzelnen Magnetfeldlinien und der radialen Ausrichtung spitze Winkel ergeben, aber generell oder im Durchschnitt verläuft das Magnetfeld im Wesentlichen radial. Das Gleiche gilt auch für den anderen Bremsspaltabschnitt mit der Scheibenkontur, bei der sich an dem radialen Ende der Scheibenkontur auch eine dreidimensionale Ausrichtung der Magnetfeldlinien ergeben kann, die aber im Durchschnitt oder insgesamt doch wieder im Wesentlichen radial ausgerichtet sind.

In bevorzugten Weiterbildungen sind die erste elektrische Spule und die zweite elektrische Spule unterschiedlich ausgebildet. Vorzugsweise unterscheiden sich die erste elektrische Spule und die zweite elektrische Spule in wenigstens einem Parameter aus einer Gruppe von Parametern, welche Gruppe als Parameter den Drahtdurchmesser und den Drahtquerschnitt, die Wicklungszahl, das Wickelfenster, die Wickelart, die Spulenbreite, den Spulendurchmesser und das Material umfasst.

Insbesondere ist in einem axialen Bereich (direkt) benachbart zu der ersten elektrischen Spule eine Scheibenkontur oder ein Scheibenkörper zwischen dem Mantelteil und dem Kern ausgebildet und in einem (anderen) axialen Abschnitt ist (direkt) benachbart zu der zweiten elektrischen Spule eine Mehrzahl von Wälzkörpern (als Magnetfeldkonzentratoren) auf dem Umfang des Kerns angeordnet. Die Wälzkörper sind insbesondere in einer gemeinsamen Ebene quer oder senkrecht zur Rotationsachse angeordnet. Vorzugsweise können sich die Wälzkörper vollständig um den Kern herum bewegen. Eine Außenoberfläche des Kerns ist in dem zweiten Bremsspaltabschnitt vorzugsweise zylindrisch ausgebildet. Vorzugsweise ist (direkt) zwischen der ersten elektrischen Spule und der zweiten elektrischen Spule die Ringkontur angeordnet.

Vorzugsweise ist ein Radius bzw. (typischer oder maximaler) Durchmesser des ersten Bremsspaltabschnittes etwa und insbesondere genau so groß wie ein Radius bzw. (typischer oder maximaler) Durchmesser des zweiten Bremsspaltabschnittes und/oder des dritten Bremsspaltabschnittes. Dadurch werden große Momente auch bei höheren Drehzahlen und beim Anlaufen aus dem Stand erzeugbar.

Das magnetorheologische Medium benetzt insbesondere die erste und die zweite Bremskomponente wenigstens abschnittsweise.

Die erste elektrische Spule und die zweite elektrische Spule sind vorzugsweise um die Rotationsachse herumgewickelt und erzeugen im Wesentlichen ein Magnetfeld in axialer Richtung innerhalb des Kerns. Die beiden elektrischen Spulen sind dabei radial zwischen dem Kern und dem Mantelteil aufgenommen. Die elektrischen Spulen können dabei um den Kern gewickelt oder auch innen an dem Mantelteil befestigt sein.

Der Kern besteht aus einem magnetisch (gut) leitfähigen Material. Die erste Bremskomponente umfasst den Kern und insbesondere eine Achse oder einen Schaft, der insbesondere wenigstens zum Teil oder vollständig aus einem magnetisch nichtleitenden Material besteht. Vorzugsweise sind die Achse (der Schaft) und der Kern lösbar miteinander verbunden.

Die Scheibenkontur besteht wenigstens teilweise oder vollständig auch aus einem magnetisch (gut) leitfähigen Material.

In einer bevorzugten Weiterbildung ist die Scheibenkontur als separater Scheibenkörper ausgebildet. Möglich ist es auch, dass die Scheibenkontur einstückig mit dem Kern ausgebildet ist und z. B. T-förmig gestaltet ist, wobei der lange Schenkel des "T" entlang der Rotationsachse verläuft. Möglich ist es auch, dass ein Teil der Scheibenkontur einstückig mit dem Kern ausgebildet ist und durch einen separaten Scheibenkörper ergänzt wird. In einfachen und besonders bevorzugten Ausgestaltungen wird die Scheibenkontur durch einen separaten Scheibenkörper gebildet, der an oder auf dem Kern befestigt wird.

Vorzugsweise wird der Scheibenkörper auf den Kern aufgebracht. Dazu weist der Kern insbesondere eine angepasste Aufnahme auf. Möglich und bevorzugt ist es zum Beispiel, dass der Scheibenkörper mit dem Kern verbunden oder aufgepresst wird. Möglich ist es aber auch, dass die Scheibenkontur bzw. der Scheibenkörper mit dem Mantelteil verbunden und zum Beispiel darin eingepresst wird. Denkbar ist es auch, dass zwei aufeinander angepasste Scheibenkörper eingesetzt werden, zwischen denen ein radialer Bremsspaltabschnitt gebildet wird. Dabei kann eine erste hohlzylindrische Scheibenkontur auf den Kern aufgebracht werden und eine zweite hohlzylindrische Scheibenkontur mit einem entsprechend großen Innendurchmesser in das Mantelteil eingebracht werden, sodass die beiden Scheibenkonturen zum Beispiel in axialer Richtung zueinander ausgerichtet sind und einen kleinen (radialen) Spalt zwischen sich belassen. Zwischen den beiden Scheibenkonturen verbleibt dann ein insbesondere im Wesentlichen radial ausgebildeter Bremsspaltabschnitt.

In besonders bevorzugten Ausgestaltungen weist die Scheibenkontur wenigstens ein Scheibenpaket auf. Das Scheibenpaket wird insbesondere durch eine Mehrzahl von vorzugsweise direkt aneinander anliegenden Scheibenblechen gebildet. Eine solche Ausgestaltung ermöglicht beispielsweise die Fertigung der Scheibenbleche als Stanzteil. Stanzteile können besonders leicht und kostengünstig in großen Stückzahlen hergestellt werden. Werden sie aufeinandergestapelt und zum Beispiel miteinander verpresst, so kann leicht und kostengünstig ein Scheibenpaket bzw. ein Scheibenkörper mit erheblich größerer Dicke bereitgestellt werden. Dadurch werden Scheibenbleche und auch Scheibenpakete sehr kostengünstig herstellbar.

Es ist bevorzugt, dass wenigstens einige Scheibenbleche oder nahezu alle Scheibenbleche oder alle Scheibenbleche jeweils rund ausgebildet sind und den gleichen Durchmesser oder doch ähnliche Durchmesser aufweisen. Möglich ist aber auch der Einsatz von einigen oder einzelnen unrund ausgebildeten Scheibenblechen, an denen beispielsweise radial außen eine unrunde Außenkontur oder eine Zahnstruktur oder Sternkontur ausgebildet ist. Werden rund und unrund ausgebildete Scheibenbleche zu einem Scheibenpaket gestapelt, so kann eine komplexe Außenkontur erzeugt werden, die lokal zu einer größeren Magnetfeldkonzentration führen kann.

Möglich ist es auch, dass ein Scheibenpaket mehrere rund (oder unrund) ausgebildete Scheibenbleche mit unterschiedlichen Außendurchmessern umfasst. So können abwechselnd runde Scheibenbleche mit geringerem und mit größerem Durchmesser vorgesehen sein.

Einzelne Scheiben können auch verschiedene Eigenschaften haben (z.B. aufgrund von unterschiedlichem Material). Einzelne Scheiben können auch aus (gesintertem) Magnetwerkstoff sein (z.B. Neodym).

In besonders bevorzugten Ausgestaltungen weist die Scheibenkontur insgesamt eine zylindrische Außenkontur auf. Möglich und bevorzugt ist auch, dass die Scheibenkontur eine Sternkontur umfasst oder als eine solche ausgebildet ist.

Es ist möglich und bevorzugt, dass die Scheibenkontur an wenigstens einer axialen Seite eine (axial) nach außen abstehende Außenkontur aufweist. Die Scheibenkontur kann dabei insgesamt konisch, bauchig, abgerundet oder abgestuft ausgebildet sein. Insbesondere ist die Scheibenkontur rotationssymmetrisch im Bereich der Außenkontur ausgebildet. Die nach außen abstehende Außenkontur kann sich beispielsweise an einem Deckel oder dergleichen abstützen oder dort geführt werden. Die nach außen abstehende Außenkontur ermöglicht dadurch die Bereitstellung eines Reservoirs an magnetorheologischen Partikeln.

In allen Ausgestaltungen mit Einsatz von Wälzkörpern ist es bevorzugt, dass ein radialer Freiraum für einen Wälzkörper zwischen dem Mantelteil und dem Kern in dem zweiten Bremsspaltabschnitt größer ist als eine Spalthöhe in dem ersten Bremsspaltabschnitt (in dem Bereich der Scheibenkontur). Ein radialer Freiraum ergibt sich dabei als Differenz der Spalthöhe in dem zweiten Bremsspaltabschnitt abzüglich des Durchmessers des Wälzkörpers. Typischerweise teilt sich der radiale Freiraum etwa gleichmäßig radial außerhalb des Wälzkörpers und radial innerhalb des Wälzkörpers auf. In einfachen Fällen ist der Wälzkörper radial mittig angeordnet und der radiale Abstand der Außenfläche des Wälzkörpers zur inneren Oberfläche des Mantelteils und der radiale Abstand von der äußeren Umfangsfläche des Kerns zur radial inneren Außenoberfläche des Wälzkörpers sind etwa gleich.

Vorzugsweise ist der radiale Freiraum (insgesamt) für einen Wälzkörper in dem zweiten Bremsspaltabschnitt mehr als doppelt und insbesondere wenigstens dreimal so groß wie die Spalthöhe in dem ersten Bremsspaltabschnitt. Das bedeutet, dass im Normalfall der Wälzkörper radial nach außen und radial nach innen mehr Spielraum hat als die Spalthöhe an dem Scheibenkörper in dem ersten Bremsspaltabschnitt beträgt. Es ist auch möglich und bevorzugt, dass der radiale Freiraum für einen Wälzkörper in dem zweiten Bremsspaltabschnitt viermal so groß oder noch größer ist als die Spalthöhe in dem ersten Bremsspaltabschnitt. Vorzugsweise ist eine Spalthöhe an dem Bremsspaltabschnitt an der Scheibenkontur kleiner als 0,15 mm und vorzugsweise kleiner als 0,1 mm.

Vorzugsweise sind der radiale Freiraum in dem zweiten Bremsspaltabschnitt und die Spalthöhe in dem ersten Bremsspaltabschnitt an der Scheibenkontur und die Spalthöhe in dem dritten Bremsspaltabschnitt (erheblich) kleiner als ein radialer Abstand in anderen Bereichen des Spaltes. Der radiale Abstand von den Außendurchmessern der elektrischen Spulen oder von dem Außendurchmesser eines Überzugs über die elektrischen Spulen oder einer Umspritzung der elektrischen Spulen bis zur radialen Innenwandung des Mantelteils ist (axial) außerhalb der beiden Bremsspaltabschnitte vorzugsweise (erheblich) größer als in den beiden Bremsspaltabschnitten. Der Größenunterschied kann den Faktor 2 oder 3 erreichen und weit übersteigen.

In konkreten Ausgestaltungen beträgt der radiale Freiraum für einen Wälzkörper in dem zweiten Bremsspaltabschnitt etwa 0,2 mm, während die Spalthöhe in dem ersten Bremsspaltabschnitt etwa 0,05 mm beträgt. Dabei sind jeweils Abweichungen von +/- 50 % möglich. Insgesamt beträgt dann das radiale Spiel an einem haptischen Bedienknopf im Bereich der Wälzkörper das Doppelte des radialen Freiraums, da auf gegenüberliegenden Seiten des Kerns jeweils Wälzkörper angeordnet sind, insgesamt in diesem Beispiel 0,4 mm. Im Bereich des ersten Bremsspaltabschnitts mit einer Spalthöhe von 0,05 mm ergibt sich dann insgesamt ein radiales Spiel von 2 × 0,05 mm, also von 0,1 mm.

Aufgrund dieses sehr geringen Spiels kann wenigstens an dem Ende mit der Scheibenkontur in vielen Fällen auf ein separates Lager verzichtet werden. Die Scheibenkontur übernimmt dann zusammen mit dem Mantelteil die Führung oder Lagerung des Mantelteils gegenüber dem Kern. Das ermöglicht eine nochmals einfachere und noch kostengünstigere Konstruktion.

In allen Ausgestaltungen kann die Innenkontur und/oder bevorzugt das Mantelteil unrund sein (z.B. elliptisch...). Der Kern kann exzentrisch zum Mantelteil gelagert sein. Dadurch ergibt sich bei der Drehung (des Rotors zum Stator) ein sich ändernder Relativspalt an bestimmten Stellen.

In besonders bevorzugten Ausgestaltungen sind die elektrischen Spulen axial zwischen dem ersten und dem zweiten Bremsspaltabschnitt angeordnet. Besonders bevorzugt grenzt wenigstens ein Bremsspaltabschnitt axial mittelbar oder unmittelbar an eine der elektrischen Spulen an.

In allen Ausgestaltungen ist es besonders bevorzugt, dass das Magnetfeld der Magnetkreisläufe wenigstens zum Teil jeweils axial durch den Kern und das Mantelteil und zu einem erheblichen Teil radial und besonders bevorzugt im Wesentlichen radial durch den dritten Bremsspaltabschnitt durchtritt. Weiterhin durchtritt das Magnetfeld der ersten elektrischen Spule zu einem erheblichen Teil radial und besonders bevorzugt im Wesentlichen radial durch den ersten Bremsspaltabschnitt und das der zweiten elektrischen Spule durch den zweiten Bremsspaltabschnitt. In einfachen Ausgestaltungen sind die elektrischen Spule jeweils um den Kern gewickelt und erzeugen in der axialen Richtung der Rotationsachse innerhalb des Kerns jeweils ein Magnetfeld, welches an den jeweiligen Enden der elektrischen Spulen radial nach außen geleitet wird und an einem axialen Ende durch die Scheibenkontur und den ersten bzw. zweiten Bremsspaltabschnitt und an dem anderen axialen Ende jeweils durch den dritten Bremsspaltabschnitt jeweils vom Kern in das Mantelteil bzw. umgekehrt übertritt. Eine solche Ausgestaltung erlaubt einen besonders einfachen, kostengünstigen und dennoch effektiven Aufbau.

Vorzugsweise bestehen die Wälzkörper wenigstens teilweise und insbesondere nahezu vollständig oder vollständig aus einem magnetisch leitenden Material.

Magnetisch nichtleitende Körper oder Wälzkörper können auch vorhanden sein. Nichtleitende Körper können als Platzhalter oder Führungselemente dienen und beliebige Formen aufweisen. So können zwischen den (magnetisch leitenden) Wälzkörpern magnetisch nichtleitende Körper angeordnet sein. Mehrere nichtleitende Körper (z. B. Führungselemente) können untereinander verbunden sein, z.B. in Form eines Käfigs. Dies erleichtert die Montage.

Besonders bevorzugt führt die Scheibenkontur das Mantelteil drehbar und dient als Lagerstelle.

Vorzugsweise ist zwischen den Bremskomponenten eine geschlossene Kammer ausgebildet. Insbesondere ist die geschlossene Kammer wenigstens zu einem erheblichen Anteil und insbesondere im Wesentlichen mit einem magnetorheologischen Medium wie einem magnetorheologischen Fluid und/oder z. B. (trockenem oder pulverförmigen) Carbonyleisenpulver gefüllt. Insbesondere ist die zweite Bremskomponente an der ersten Bremskomponente drehbar aufgenommen.

Die erste Bremskomponente umfasst vorzugsweise eine Achse, die wenigstens zu einem Teil aus einem nicht magnetisch leitfähigen Material ausgebildet ist. An der Achse oder einem Innenteil ist der Kern aus einem magnetisch leitfähigen Material befestigt.

Vorzugsweise ist die zweite Bremskomponente axial verschieblich an der ersten Bremskomponente aufgenommen. Das kann beispielsweise (auch) dazu dienen, einen Volumenausgleich bei Temperaturänderungen und/oder bei Leckage zu ermöglichen. Bevorzugt ist es, dass eine radiale und/oder axiale Position der beiden Bremskomponenten zueinander sensorisch erfasst wird.

Es ist bevorzugt und vorteilhaft, dass die (insbesondere absolute) Position der Lenkeinrichtung erfassbar ist. Insbesondere ist die (insbesondere relative) Position der Bremskomponenten erfassbar. Es soll insbesondere nicht nur die relative Position der Bremskomponenten erfasst werden, sondern auch die absolute Position der Lenkeinrichtung. Da die Lenkeinrichtung über elektrische Anschlüsse verfügen kann, wie z.B. einer Wickelfeder, und diese nicht abgerissen werden darf. Dazu ist insbesondere wenigstens ein Absolutsensor verbaut, der das Ende des Lenkanschlags erkennt. Die Bremse erzeugt dann insbesondere einen Endanschlag. Der Absolutsensor ist insbesondere auch notwendig, wenn das Fahrzeug geparkt wird und der Lenkeinschlag nicht bei der Neutralstellung ist. Wenn das Fahrzeug wieder in Betrieb genommen wird, kann das Lenkungssteuergerät dadurch erkennen, welchen Einschlagwinkel die Räder einnehmen.

Ein Drehmomentsensor kann zusätzlich im Lenkstrang bzw. der Lenkungswelle verbaut werden.

In allen Ausgestaltungen ist es bevorzugt, dass an den einem und insbesondere dem distalen Ende der Kammer ein Klickelement angeordnet ist. Ein solches Klickelement ermöglicht insbesondere zwei Zustände, wobei nach dem Betätigen des Klickelements z. B. ein Blech hörbar und/oder taktil fühlbar umschaltet und dabei eine (geringe) axiale Verschiebung durchführt. Solche z. B. als Schnappteile oder Schnappscheiben ausgeführten Klickelemente sind beispielsweise von Tastaturen oder anderen Einrichtungen bekannt und ermöglichen eine kostengünstige und effektiv fühlbare Rückmeldung bei Betätigung eines Tasters oder dergleichen.

Vorzugsweise ist das Klickelement an einem Ende der Kammer angeordnet. Besonders bevorzugt trennt eine elastische Membran die Kammer von dem Klickelement. Das Klickelement kann als Schnappteil oder Schnappscheibe ausgeführt sein. Dadurch kann ein Volumenausgleich an der Kammer bereitgestellt werden, wenn die Achse in die Kammer weiter eintaucht oder wieder austaucht.

In besonders bevorzugten Weiterbildungen wird die Schnappscheibe so ausgebildet, dass eine Änderung des aufgespannten Volumens der Schnappscheibe zwischen den beiden Zuständen der Schnappscheibe an eine Querschnittsfläche der Achse multipliziert mit einem Axialversatz der Schnappscheibe bei Betätigung angepasst ist. Insbesondere unterscheiden sich die beiden Volumina um weniger als 50 % oder 25 % und vorzugsweise um weniger als 10 % oder weniger als 5 %. Eine derartige Ausgestaltung, bei der die Schnappscheibe an die Achse angepasst wird, sorgt dafür, dass nur ein geringes oder gegebenenfalls gar kein Volumen für einen Volumenausgleich bei der Betätigung der Schnappscheibe bereitgestellt werden muss.

Der Einsatz eines Klickelements oder Schnappteils am distalen Ende der Kammer in Zusammenhang mit der Ausbildung des ersten Bremsspaltabschnitts mit der Scheibenkontur ebenfalls nahe dem distalen Ende der Kammer ermöglicht eine besonders einfache und effektive Führung und Lagerung des Mantelteils, da nur ein geringes radiales Spiel vorliegt und die Scheibenkontur deshalb eine (in vielen Fällen) ausreichende Führung in radialer Richtung des Mantelteils übernehmen kann.

In bevorzugten Weiterbildungen ist eine Sensoreinrichtung oder wenigstens eine Sensoreinrichtung zur Erfassung eines relativen Drehwinkels zwischen dem Kern und dem Mantelteil umfasst.

Bevorzugt ist eine Sensoreinrichtung oder wenigstens eine Sensoreinrichtung zur Erfassung einer relativen Axialposition von dem Mantelteil zu dem Kern umfasst. Besonders bevorzugt umfasst die Sensoreinrichtung oder wenigstens eine Sensoreinrichtung wenigstens einen Magnetfeldsensor, der zur Erfassung eines Drehwinkels und einer Axialposition ausgebildet ist. In besonders vorteilhaften Ausgestaltungen umfasst die Sensoreinrichtung wenigstens einen Hall-Sensor.

In einfachen bevorzugten Ausgestaltungen wird der Magnetfeldsensor an der feststehenden Bremskomponente aufgenommen und wird einem in radialer Richtung wirkenden Magnetfeld ausgesetzt. Darüber kann über die Orientierung des Magnetfeldsensors relativ zu dem Magnetfeld ein Drehwinkel ermittelt werden. Eine axiale Verschiebung der Sensoreinrichtung relativ zu dem Mantelteil kann über eine Intensität der Magnetfeldstärke abgeleitet werden.

Besonders bevorzugt ist wenigstens eine Abschirmeinrichtung zur wenigstens teilweisen Abschirmung der Sensoreinrichtung vor einem Magnetfeld der elektrischen Spule umfasst. Vorzugsweise umfasst die Abschirmeinrichtung wenigstens einen Abschirmkörper. Der Abschirmkörper ist insbesondere dazu ausgebildet, eine Magnetringeinheit zur Beaufschlagung des Magnetfeldsensors mit einem definierten (z. B. radialen) Magnetfeld von störenden Magneteinflüssen der elektrischen Spule abzuschirmen. Dazu gibt der Abschirmkörper die Magnetringeinheit vorzugsweise wenigstens abschnittsweise. Vorzugsweise umgibt die Abschirmeinrichtung die Magnetringeinheit nach drei Seiten, nämlich von beiden axialen Seiten und radial nach außen. Vorzugsweise umfasst die Abschirmeinrichtung wenigstens eine zwischen dem Abschirmkörper und der Magnetringeinheit angeordnete Trenneinheit. Dadurch wird das Magnetfeld der Magnetringeinheit von dem Abschirmkörper entkoppelt. Weiterhin ist vorzugsweise wenigstens eine zwischen dem Abschirmkörper und dem Mantelteil angeordnete magnetische Entkopplungseinrichtung umfasst. Vorzugsweise weisen die Trenneinheit und/oder die Entkopplungseinrichtung eine um ein Vielfaches geringere magnetische Leitfähigkeit als der Abschirmkörper auf. Vorzugsweise sind die Abschirmeinrichtung und die Magnetringeinheit voneinander beabstandet angeordnet.

Eine Abschirmeinrichtung ermöglicht eine erhebliche Verbesserung der Messqualität. Insbesondere sind dadurch feine Winkelauflösungen und geringe axiale Abstand erfassbar.

Die Ansteuerung der Magnetspule erfolgt vorzugsweise meist oder überwiegend während der Betriebszeit mit einer Spannung von insbesondere 12V. Haptisch ist es (oft) von erheblichem Vorteil, wenn das Bremsmoment der magnetorheologischen Bremseinrichtung so schnell wie möglich den maximalen oder eingestellten Wert erreicht. Das ist manchmal nur mit einer größeren Spannung möglich. Ein maximales Bremsmoment wird generell durch ein maximales Magnetfeld im Bremsspalt erreicht. Da das Magnetfeld durch den Strom in der elektrischen Spule (Magnetspule) erzeugt wird, muss deshalb auch der Strom so schnell wie möglich auf maximalen Wert eingestellt werden. Grundsätzlich kann man die Spannung immer auf einen hohen Wert einstellen, im konkreten Fall statt auf z. B. 12V auf z. B. 24V. Dazu müssten jedoch alle Bauteile (elektrische Spule bzw. Magnetspule, der Spulendraht etc.) entsprechend anders ausgelegt werden (und z.B. ein Draht mit größerem Durchmesser verwendet wird).

Deshalb wird in bevorzugten Ausgestaltungen und Weiterbildungen wenigstens (insbesondere nur) am Beginn einer haptischen Rückmeldung eine höhere Spannung eingestellt (als z. B. im Dauerbetrieb nötig wäre). Insbesondere am Beginn oder nahezu direkt nach einer haptischen Rückmeldung wird vorzugsweise für einen Zeitraum von zwischen 0,5 ms und 50ms, vorzugsweise in einem Zeitraum zwischen 1 ms und 20 ms und besonders bevorzugt zwischen 5 ms und 15 ms, eine höhere Spannung eingestellt (z. B. um den Faktor 1,5 oder 2 oder 3 höher als im Dauerbetrieb nötig wäre). Die höhere Spannung wird insbesondere beibehalten, bis der Strom (bzw. das Magnetfeld) den gewünschten Maximalwert (nahezu, z.B. zu 90% oder 95%) erreicht und/oder der Zeitraum erreicht oder überschritten wird, den die höhere Spannung wirken kann. Danach wird die Spannung auf die geringere Spannung von z. B. 12 V zurück geregelt. Das System reagiert schneller und das gewünschte Bremsmoment wird schneller eingestellt.

Besonders bei modernen Elektroautos sind mehrere Spannungen im Fahrzeug vorhanden und hohe Spannungen/Ströme möglich, sodass diese nicht extra erzeugt bzw. transformiert werden müssen. Bei diesen Elektrofahrzeugen sind auch viel höhere Spannungen vorhanden (z.B. bis 800 Volt) und solche Stromstärken möglich, dass die zuvor beschriebenen Eigenschaften vorteilhaft genutzt werden können

Insbesondere ist die magnetische Feldstärke zwischen einzelnen magnetisch polarisierbaren Partikeln des magnetorheologischen Mediums größer als 300 kA/m. Insbesondere ist die im Spalt, vorzugsweise in wenigstens einem der Bremsspaltabschnitte, erzeugbare magnetische Feldstärke größer als 500 kA/m.

Das erfindungsgemäße Verfahren dient zum Betreiben einer Lenkeinrichtung mit einer magnetorheologischen Bremseinrichtung mit zwei Bremskomponenten, wobei die beiden Bremskomponenten relativ zueinander kontinuierlich um eine Rotationsachse drehbar sind, wobei sich eine erste Bremskomponente entlang der Rotationsachse erstreckt und einen Kern aus einem magnetisch leitfähigen Material umfasst und wobei die zweite Bremskomponente ein sich um die erste Bremskomponente herum erstreckendes hohl ausgebildetes Mantelteil umfasst, wobei zwischen der ersten und der zweiten Bremskomponente wenigstens drei axial voneinander beabstandete und umlaufende und wenigstens zum Teil mit einem magnetorheologischen Medium gefüllte Bremsspaltabschnitte ausgebildet sind. Dabei erzeugt eine erste elektrische Spule ein (erstes) gesteuertes Magnetfeld in einem ersten Bremsspaltabschnitt. Unabhängig davon erzeugt eine zweite elektrische Spule ein (zweites) gesteuertes Magnetfeld in einem zweiten Bremsspaltabschnitt, um insbesondere abhängig von der Drehzahl unterschiedlich starke Bremswirkungen zu erzeugen. Dabei werden die Magnetfelder der ersten und der zweiten elektrischen Spule insbesondere beide über den dritten Bremsspalt geschlossen werden.

Auch das erfindungsgemäße Verfahren löst die zuvor gestellte Aufgabe besonders vorteilhaft. Das Verfahren ist insbesondere so ausgebildet, dass die erfindungsgemäße Lenkeinrichtung danach betreibbar ist. Insbesondere ist die Lenkeinrichtung nach dem erfindungsgemäßen Verfahren betreibbar.

Im Rahmen der vorliegenden Erfindung wird unter einem Blockieren insbesondere verstanden, dass mit einer betriebsgemäß aufzubringenden Handkraft keine Bewegung der Lenkeinheit (in wenigstens eine Drehrichtung und/oder in beide (alle) betriebsgemäßen Drehrichtungen) erfolgen kann. Insbesondere ist mittels der Bremseinrichtung die Bewegbarkeit der Lenkeinheit auch freigebbar. Im Rahmen der vorliegenden Erfindung wird unter einer Freigabe insbesondere verstanden, dass nur ein betriebsgemäßes Grundmoment (auch als Leerlaufmoment bezeichnet) der Bremseinrichtung vorliegt, ohne dass eine zusätzlich aufgeschaltete magnetorheologische Verzögerung, beispielsweise durch Bestromung der Spule, vorliegt. Wenn die Bewegbarkeit freigegeben ist, ist die magnetorheologische Bremseinrichtung insbesondere inaktiv, sodass kein Feld zur aktiven Beeinflussung des magnetorheologischen Mediums erzeugt wird.

Weitere Vorteile und Merkmale der vorliegenden Erfindung ergeben sich aus den Ausführungsbeispielen, welche im Folgenden mit Bezug auf die beiliegenden Figuren erläutert werden.

Darin zeigen:
- Figuren 1: eine rein schematische Darstellung einer erfindungsgemäßen Lenkeinrichtung mit einer magnetorheologischen Bremseinrichtung;
- Figur 2: eine Seitenansicht einer Bremseinrichtung;
- Figuren 3a-3c: verschiedene Schnitte von Bremseinrichtungen;
- Figuren 4a-4b: eine stark schematische Ansicht einer Sensoreinrichtung und von Messergebnissen;
- Figur 5: eine stark schematische Ansicht einer Bremseinrichtungen mit einer Schnappscheibe in unterschiedlichen Stellungen;
- Figur 6: zwei unterschiedlich ausgebildete elektrische Spulen;
- Figuren 7-8: eine weitere haptische Bremseinrichtung im Schnitt und in einer Perspektive;
- Figur 9: eine stark schematische Schaltung zur Ansteuerung der elektrischen Spule;
- Figur 10: eine Skizze mit Bremsmomentverläufen zur Veranschaulichung der Funktionsweise der Bremseinrichtung; und
- Figur 11: eine weitere Skizze mit Bremsmomentverläufen.

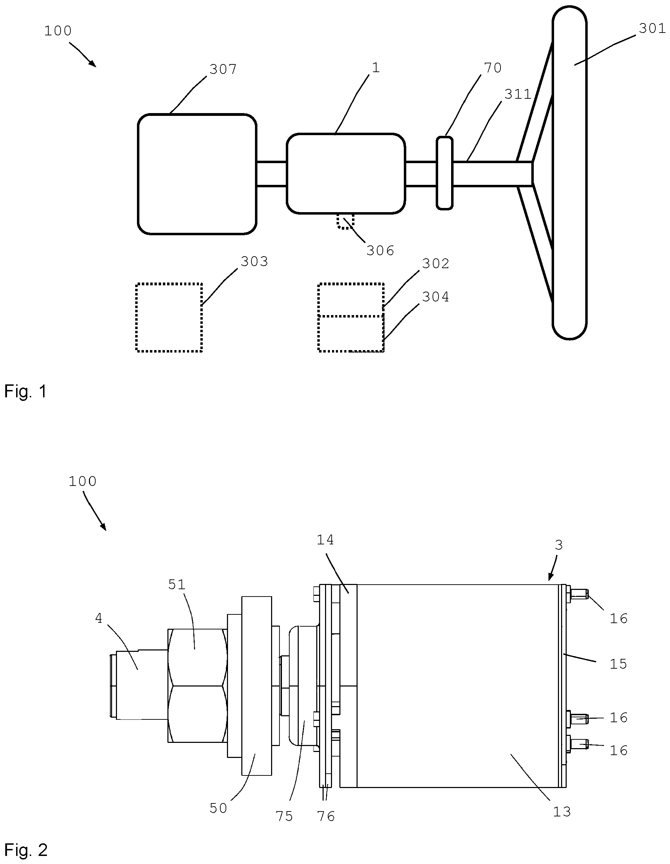

Die Figur 1 zeigt eine erfindungsgemäße Lenkeinrichtung 100 zum Lenken eines hier nicht näher dargestellten Fahrzeugs mittels einer Lenkeinheit 301. Die Lenkeinheit 101 ist hier als ein drehbares Lenkrad ausgebildet, welches mit einer Lenkungswelle 311 drehfest verbunden ist.

Die Lenkeinrichtung 100 ist hier als eine Steer-by-Wire-Lenkung ausgebildet. Dazu dient eine Aktuatoreinrichtung 303 zur Umsetzung der mit der Lenkeinheit 301 ausgeführten Lenkbewegung in eine Fahrzeugbewegung. Beispielsweise lenkt die Aktuatoreinrichtung 303 das Fahrzeugrad oder die Fahrzeugräder. Die Aktuatoreinrichtung 303 ist nur elektrisch mit der Lenkeinheit 101 verbunden.

Die Drehbewegung der Lenkeinheit wird mittels einer Sensoreinrichtung 70 und beispielsweise einem Drehwinkelsensor erfasst. In Abhängigkeit des Drehwinkels lenkt die Aktuatoreinrichtung 303 dann z. B. das Fahrzeugrad oder die Fahrzeugräder. Es können damit z. B. die vorderen und/oder auch die hinteren Räder gelenkt werden oder auch bei einem Dreirad die Schrägstellung des Dreirades. Es können damit auch die Räder von Vorderachse und Hinterachse oder sogar aller Achsen gelenkt werden (sog. crab steering).

An der Lenkungswelle 311 ist hier eine als Elektromotor ausgebildete Antriebseinrichtung 307 angebunden. Durch die Antriebseinrichtung 307 kann die Lenkeinheit 301 aktiv gedreht werden. Dadurch wird die Lenkeinheit 301 beispielsweise beim Kurvenfahren aktiv bewegt, wie es auch bei einer konventionellen mechanischen Lenkung der Fall wäre.

Die Bewegung der Lenkeinheit 101 kann mittels einer magnetorheologischen Bremseinrichtung 1 gezielt gebremst werden. Zur Ansteuerung der Bremseinrichtung 1 und auch der Antriebseinrichtung 307 in Abhängigkeit verschiedener Parameter und z. B. des Lenkwinkels ist hier ein Lenkungssteuergerät 302 vorgesehen. Dazu ist das Lenkungssteuergerät 302 mit der Sensoreinrichtung 70 wirkverbunden.

Das Lenkungssteuergerät 302 berücksichtigt beispielsweise auch Daten eines Fahrassistenzsystems 304. Dadurch kann die Bewegung der Lenkeinheit 301 je nach Fahrsituationen gezielt beeinflusst werden. Das Lenkungssteuergerät 302 kann auch mit weiteren hier nicht näher dargestellten Sensoren wirkverbunden sein, um das Lenkverhalten in Abhängigkeit weiterer Parameter gezielt beeinflussen zu können.

Die Bremseinrichtung 1 ist hier mit einer Sicherheitseinrichtung 306 ausgestattet, welche ein hier nicht sichtbares magnetorheologisches Medium 6 aus einem hier ebenfalls nicht sichtbaren Spalt 5 entfernt. So kann beispielsweise bei einer Störung das Bremsmoment sehr zügig und zuverlässig aufgehoben werden. Der Spalt 5 und das Medium 6 werden mit Bezug zu den nachfolgenden Figuren näher vorgestellt.

Figur 2 zeigt eine Seitenansicht eine Bremseinrichtung 1 mit einem Halter 4, der über eine Mutter 51 beispielsweise an einer Konsole 50 befestigt werden kann. Die Bremseinrichtung 1 hat zwei Bremskomponenten 2, 3, von denen die hier innere Bremskomponente 2 in Figur 2 nicht sichtbar ist. Die innere Bremskomponente 2 ist mit dem Halter 4 verbunden. Der Halter 4 und die innere Bremskomponente 2 sind hier feststehend ausgebildet. Die andere Bremskomponente 3 umfasst das Mantelteil 13 und ist rotierbar an der ersten Bremskomponente 2 aufgenommen.

Die Bremseinrichtung 1 ist kompakt aufgebaut und verfügt im Inneren der Abschirmeinrichtung 75, die über einen hier zweiteiligen Abschirmkörper 76 als Abschirmgehäuse verfügt, über eine hier nicht erkennbare Sensoreinrichtung 70 zur Erfassung der Drehposition und der Axialposition des Mantelteils 13. Über Stifte 16 ist das Mantelteil 13 mit einem linken Deckel 14 und einem rechten Deckel 15 verbunden, um eine innere geschlossene Kammer 110 abzudichten.

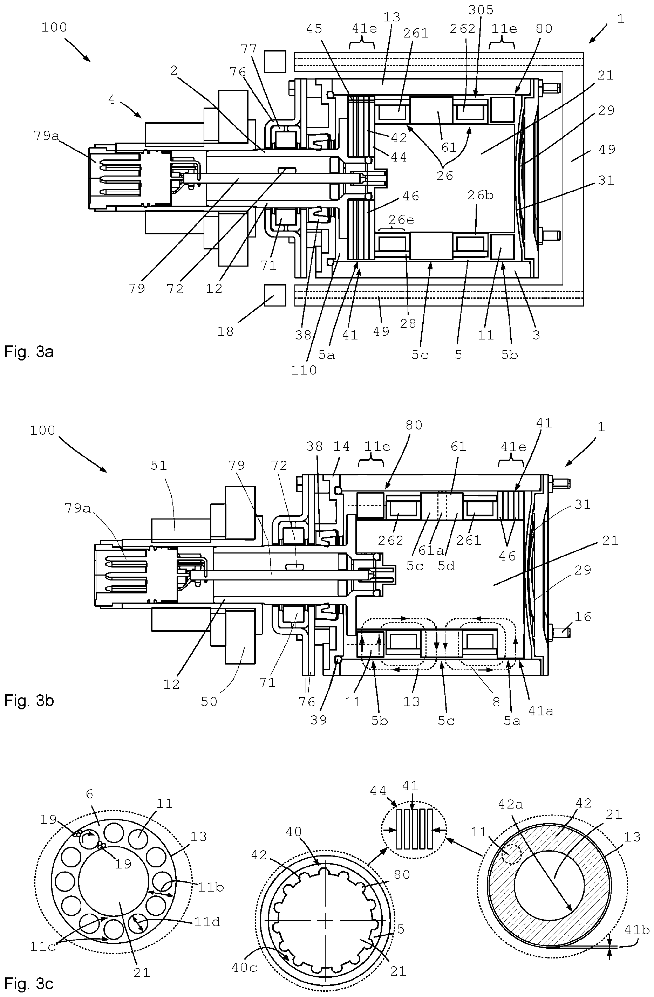

In den Figuren 3a bis 3c sind mögliche Querschnitte einer Bremseinrichtung 1 z. B. aus Figur 2 abgebildet. An dem Halter 4 ist die Bremskomponente 2 aufgenommen, die sich in axialer Richtung erstreckt und an der der Kern 21 befestigt ist. Radial umgeben wird der Kern 21 von dem (magnetisch leitenden) Mantelteil 13 als äußerer oder zweiter Bremskomponente 3.

Der magnetisch leitende Kern 21 ist von zwei elektrischen Spulen 26 umgeben, die um den Kern 21 herumgewickelt sind. Die erste elektrische Spule 261 erstreckt sich über eine axiale Breite 26e. An dem dem Halter 4 zugewandten Ende des Kerns 21 ist eine Scheibenkontur 41 ausgebildet, die hier auf den Kern aufgebracht und z. B. aufgepresst ist. Die Scheibenkontur 41 weist hierzu einen hohlzylindrisch ausgebildeten Scheibenkörper 42 auf. Die Aufnahme an dem Kern kann auch unrund ausgebildet sein.

Der Kern 21 kann insbesondere aus gesintertem Material (Metall) hergestellt werden. Der Kern kann so einfacher in gewünschter Form gefertigt werden.

Der Scheibenkörper 42 besteht hier aus einem Scheibenpaket 44, welches durch eine Mehrzahl von dünnen Scheibenblechen 46 gebildet wird. Hier sind die Scheibenbleche 46 jeweils als Stanzteil ausgebildet und können zum Beispiel aus einem magnetisch leitenden Blech von 1 mm oder 2 mm oder auch 3 mm Dicke ausgestanzt werden. So kann einfach und kostengünstig die benötigte Anzahl von Scheibenblechen ausgestanzt werden, um die gewünschte Dicke des Scheibenkörpers 42 zu erzeugen.

Die einzelnen Scheibenbleche 46 werden miteinander verpresst und auf den Kern 21 aufgebracht und damit zum Beispiel verschraubt oder verpresst. Es verbleibt ein Bremsspaltabschnitt 5a im Bereich des Scheibenkörpers 42 mit einer geringen Spalthöhe 41b zwischen dem Außendurchmesser der Scheibenkontur 41 und dem Innenumfang des Mantelteils 13. Die axiale Breite 41e der Scheibenkontur 41 bzw. dessen Bremsspaltabschnitt 5a wird hier durch die Anzahl der Scheibenbleche 46 bestimmt und kann größer oder auch kleiner als dargestellt gewählt werden.

Die Scheibenkontur 41 grenzt hier axial unmittelbar an die erste elektrische Spule 261 an, die in einem Spulenhalter 26b aufgenommen ist und radial außen durch eine Vergussmasse 28 vollständig abgedichtet ist.

Der Scheibenkörper 42 ist mit dem Kern 21 und mit der feststehenden Bremskomponente 2 verbunden und dreht sich im Betrieb nicht. Das ermöglicht die Bildung einer Loches oder einer Aussparung zur Durchführung der Kabel 45 zum elektrischen Anschluss der ersten und zweiten elektrischen Spulen 261, 262. Die elektrischen Spulen 261, 262 können dadurch einfach kostengünstig und schnell angeschlossen werden.

Die Scheibenkontur 41 ist hier am proximalen Ende, also an dem Ende des Kerns 21, der dem Halter 4 zugewandt ist, ausgebildet. An dem distalen Ende, also an dem anderen Ende des Kerns 21, ist ein zweiter Bremsspaltabschnitt 5b ausgebildet. Der zweite Bremsspaltabschnitt 5b erstreckt sich über eine axiale Breite 11e. Dort sind auf dem Umfang des Kerns 21 die Wälzkörper 11 verteilt angeordnet. Die Wälzkörper 11 verstärken das Magnetfeld lokal. Die Wälzkörper 11 können eine Art von Magnetfeldkonzentratoren 80 zur lokalen Verstärkung des Magnetfeldes beim Durchtritt durch den zweiten Bremsspaltabschnitt 5b bilden.

Durch den zweiten Bremsspaltabschnitt 5b kann mit der zweiten elektrischen Spule 262 ein sehr hohes Bremsmoment insbesondere bei niedrigen Drehzahlen des Mantelteils 13 erreicht werden. Durch den ersten Bremsspaltabschnitt 5a im Bereich der Scheibenkontur 41 kann mit der ersten elektrischen Spule 261 bei hohen Drehzahlen ein immer noch starkes Magnetfeld von dem Kern 21 in das Mantelteil 13 übertragen werden, da die Spalthöhe 41b erheblich geringer ist als der radiale Freiraum 11c im Bereich dessen Bremsspaltabschnitt 5b beträgt. Dadurch wird ein hohes Drehmoment erzeugbar, welches insbesondere auch bei höheren Drehzahlen ermöglicht wird. Dadurch kann durch gezielte und separate Ansteuerung der beiden elektrischen Spulen 261, 262 über den gesamten Drehzahlbereich ein hohes und jeweils fein justierbares Drehmoment zur Verfügung gestellt werden.

Die axiale Breite 11e des zweiten Bremsspaltabschnitts 5b und die Breite 41e des ersten Bremsspaltabschnitts 5a sind hier etwa gleich (+/-25 %) und jeweils kürzer als eine axiale Breite des dritten Bremsspaltabschnitts 5c. Insgesamt wird ein sehr kompakter Aufbau erreicht.

Das Mantelteil 13 ist in Figur 3a von einem Überzug 49 als Drehknopf 23 umgeben. Der Drehknopf 23 ist wenigstens zum Teil transparent ausgebildet, um durch die Leuchtmittel 18 in Form von zum Beispiel LEDs beleuchtet werden zu können. Die Beleuchtung kann dabei situationsabhängig oder auch situationsunabhängig gesteuert werden. Diese Ausführung ist primär für Lenkeinrichtungen für Computerspiele gedacht, kann aber auch bei Fahrzeugen eingesetzt werden.

Am vorderen Ende wird die geschlossene Kammer 110 im Inneren des Mantelteils 13 durch einen vorderen Deckel 14 abgeschlossen, durch den die Bremskomponente 2 durchgeführt wird. Eine Dichtung 38 dient zur Abdichtung. Am hinteren oder distalen Ende wird die Kammer 110 zunächst durch eine elastische Membran 31 begrenzt, an die sich nach außen ein hier als Schnappscheibe ausgebildetes Klickelement 29 anschließt.

Die zweite Spule 262 bzw. das dazugehörige Kernmaterial ist hier zudem als eine Remanenzeinrichtung 305 ausgebildet. Wenn die Remanenzeinrichtung 305 zuvor aktiviert wurde, bleibt auch nach Abschalten der Stromzufuhr ein Magnetfeld bestehen, welches das Medium 6 beeinflusst und so ein Bremsmoment aufrechterhält. So kann ohne zusätzlichen Stromverbrauch beispielsweise eine Lenkradsperre ermöglicht werden. Ein geparktes Fahrzeug sollte so wenig wie möglich, am besten gar kein Strom verbrauchen, da sonst die Batterie geleert werden könnte (sowohl bei Fahrzeugen mit Verbrennungsmotor, als auch bei elektrisch betriebenen Fahrzeugen). Die Lenkradsperre soll deshalb auch stromlos ein hohes Sperrmoment aufbringen. Das kann eine Remanenzeinrichtung bereitstellen.

Figur 3b zeigt eine leicht andere Darstellung einer Bremseinrichtung 1, wobei hier im Unterschied zu Figur 3a der Überzug 49 bzw. der Drehknopf 23 weggelassen wurde.

Ein wesentlicher Unterschied zwischen den Figuren 3a und 3b besteht darin, dass in Figur 3b der erste Bremsspaltabschnitt 5a mit der Scheibenkontur 41 am distalen Ende des Mantelteils 13 vorgesehen ist, während der zweite Bremsspaltabschnitt 5b mit den Drehkörpern 11 an dem proximalen Ende des Mantelteils 13 vorgesehen ist.

Bei dieser Ausgestaltung kann beispielsweise außerhalb der Kammer 110 zwischen der Dichtung 38 und der Sensoreinrichtung 70 noch ein Lager zur Lagerung des Mantelteils 13 gegenüber der Bremskomponente 2 vorgesehen sein. Möglich ist es aber hier auch, dass die Lagerung an einem Ende nur über die Dichtung 38 und am anderen distalen Ende nur über die Scheibenkontur 41 erfolgt.

Die Scheibenkontur 41 kann (umlaufend) einstückig mit dem Kern ausgebildet sein, wie es im unteren Teil von Fig. 3b schematisch dargestellt ist. Oder die Scheibenkontur 41 umfasst ein (umlaufendes) Scheibenpaket mit mehreren Scheibenblechen 46, wie es beispielhaft im oberen Teil von Fig. 3b dargestellt ist. Die Scheibenkontur kann auch als massives separates Teil auf den Kern aufgesetzt sein, also praktisch aus einem einzigen Scheibenblech entsprechend größerer Dicke bestehen.

Beispielhaft eingezeichnet sind in Figur 3b einige Magnetfeldlinien 8 der ersten elektrischen Spule 261 und der zweiten elektrischen Spule 262, die den weitgehend axialen Verlauf der Magnetfeldlinien in dem Kern 21 und in dem Mantelteil 13 zeigen. Weiterhin ist auch zu erkennen, dass in den Bremsspaltabschnitten 5a und 5b jeweils ein (in etwa) radialer Durchtritt der Magnetfeldlinien 8 erfolgt. In dem Bremsspaltabschnitt 5a wird bei höheren Drehzahlen ein höheres Drehmoment erzeugt, während in dem Bremsspaltabschnitt 5b bei niedrigeren Drehzahlen ein höheres Moment erzeugt wird. Geschlossen wird das jeweilige Magnetfeld jeweils im zentralen Bereich durch den (in etwa) radialen Übertritt an dem dritten Bremsspaltabschnitt 5c. An dem Bremsspaltabschnitt 5c liegt praktisch ein dünner Spalt vor, ähnlich zu dem ersten Bremsspaltabschnitt, wenn dort eine zylinderförmige Scheibenkontur 41 eingesetzt wird.

Der Magnetfeldsensor 72 ist auf einer Sensorplatine 79 angebracht und kann über die Kontaktpins 79a kontaktiert werden. Darüber wird auch die elektrische Spule 26 mit Strom versorgt.

Wenigstens in dem Bereich der Sensoreinrichtung 70 und des Magnetfeldsensors 72 ist die innere Bremskomponente 2 vorzugsweise aus einem wenig oder nicht magnetisch leitenden Material ausgebildet, um eine möglichst ungestörte Detektion der Orientierung und der Intensität des Magnetfeldes der Magnetringeinheit 71 im Inneren der Achse 12 bzw. der ersten Bremskomponente 2 zu gewährleisten. Dort ist die Sensoreinrichtung 70 besonders geschützt aufgenommen (Schutz vor Wasser und Staub).

In Figur 3b ist ein O-Ring 39 zu erkennen, der den Deckel 14 gegenüber dem Mantelteil 13 abdichtet.

Der dritte Bremsspaltabschnitt 5c ist an der Ringkontur 61 ausgebildet. Die Ringkontur 61 kann als separater Ring auf den Kern 21 aufgeschoben oder aufgebracht sein oder die Ringkontur 61 ist einstückig mit dem Kern 21 ausgebildet. Jedenfalls ist die Ringkontur 61 magnetisch leitend mit dem Kern 21 gekoppelt.

Rein schematisch zeigt Figur 3b in der oberen Hälfte noch eine alternative Ausführung, bei der ein vierter Bremsspaltabschnitt 5d integriert ist. Der vierte Bremsspaltabschnitt 5d kann z. B. dadurch entstehen, dass die Ringkontur 61 zwei voneinander getrennte Bremsspaltabschnitte 5c und 5d zur Verfügung stellt. Beispielsweise können zwei magnetisch leitfähige Ringteile umfasst sein, die durch ein magnetisch weniger leitfähiges Zwischenteil oder Ringteil 61a voneinander getrennt sind. Dann werden zwei axial getrennte Bremsspaltabschnitte 5c und 5d ausgebildet. In anderen Ausgestaltungen können die elektrischen Spulen 261, 262 und die Bremsspaltabschnitte 5c, 5d auch weiter voneinander getrennt angeordnet sein, sodass zwei weiter voneinander getrennte Magnetkreisläufe entstehen.

Ein Aufbau mit drei Bremsspaltabschnitten, wobei der mittlere Bremsspaltabschnitt 5c für beide elektrische Spulen 261, 262 vorgesehen ist, ermöglicht einen besonders kompakten Aufbau.

Ein Aufbau wie in Figuren 3a oder 3b dargestellt, stellt eine vorteilhafte Ausgestaltung zur Verfügung. Die zweite elektrische Spule 262 ermöglicht über die Wälzkörper 11 ein besonders starkes Bremsmoment im zweiten Bremsspaltabschnitt 5b, insbesondere bei niedrigen Drehzahlen oder im Stillstand. Die erste elektrische Spule 261 ermöglicht bei höheren Drehzahlen ein hohes Bremsmoment über die sehr geringe Spalthöhe in dem ersten Bremsspaltabschnitt 5a.

Soll eine Drehbewegung abgebremst werden und ein Anschlag zur Verfügung gestellt werden, so ermöglicht die erste elektrische Spule 261 an dem ersten Bremsspaltabschnitt 5a bei höheren Drehzahlen eine stärkere Abbremsung als die zweite elektrische Spule 262 an dem zweiten Bremsspaltabschnitt 5b. Bei einer relativ geringen Übergangsdrehzahl wird das mit der zweiten elektrische Spule 262 an dem zweiten Bremsspaltabschnitt 5b erzeugbare Bremsmoment größer als das an dem ersten Bremsspaltabschnitt 5a bei dieser Drehzahl erzeugbare Bremsmoment. Das liegt daran, dass das über die Wälzkörper 11 erzeugbare Bremsmoment stärker von der Drehzahl abhängt und mit höheren Drehzahlen abfällt. Über eine Kombination unterschiedlicher Bremsspaltabschnitte 5a, 5b können so für verschiedene Drehzahlen jeweils optimale Bedingungen eingestellt werden.

Figur 3c zeigt grundsätzlich schematische Querschnitte der Bremsspaltabschnitte 5a und 5b und 5c. Dabei ist links der zweite Bremsspaltabschnitt 5b dargestellt, wobei im Inneren der Kern 21 zu sehen ist, auf dem ringsherum die Wälzkörper 11 schematisch angeordnet sind. Die Wälzkörper werden insgesamt wiederum von dem Mantelteil 13 umgeben. Die Wälzkörper weisen jeweils einen Durchmesser 11d auf. Eine radiale Spalthöhe 11b ist etwas größer als der Durchmesser 11d. Es ergibt sich ein radialer Freiraum 11c als Differenz der Spalthöhe 11b und des Durchmessers 11d. Der radiale Freiraum 11c teilt sich in der Regel radial innen und radial außen relativ gleichmäßig auf.

In der Kammer 110 ist ein magnetorheologisches Medium aufgenommen, welches magnetorheologische Partikel 19 umfasst. In der Kammer 110 ist zwischen den Bremskomponenten 2 und 3 ein Spalt 5 vorgesehen. An dem Spalt 5 sind die drei Bremsspaltabschnitte 5a, 5b und 5c ausgebildet. Die Kammer 110 ist hier wenigstens teilweise mit einem magnetorheologischen Medium 6 gefüllt. Das Medium ist hier vorzugsweise ein magnetorheologisches Fluid, welches beispielsweise als Trägerflüssigkeit ein Öl umfasst, in dem ferromagnetische Partikel 19 vorhanden sind. Glykol, Fett, Wasser und dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel 19 in die Kammer 110 gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung der Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße auch deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die magnetorheologischen Partikel können für diesen Anwendungsfall nicht nur aus Carbonyleisenpulver (Reineisen), sondern z. B. auch aus speziellem Eisen (härterem Stahl) hergestellt werden.

Es ist möglich, dass lediglich durch das Magnetfeld beeinflussbare Partikel in den Spalt 5 bzw. die Kammer 110 gefüllt werden, wobei gegebenenfalls Luft oder ein Inertgas zugegeben wird. Wenn z. B. nur Luft oder auch ein anderes Gas verwendet wird, können verschiedene Feststoffe dazu gemischt werden, um gewisse Eigenschaften zu verbessern. Z. B. kann Graphitpulver beigemischt werden, um die Reibung zwischen den Carbonyleisenpartikeln zu verringern, da Graphit eine schmierende Wirkung zeigt. Die Partikel können insbesondere mit PTFE beschichtet werden. Eine Beschichtung mit PTFE oder eine vergleichbare Beschichtung verhindert insbesondere, dass die Partikel verklumpen und größere Haufen bilden. Solche größeren Haufen zerfallen nicht leicht oder unter Umständen gar nicht mehr. Alternativ können auch die Scheibenkörper oder Walzkörper mit PTFE beschichtet werden, damit die Reibung verringert wird. Bei Verwendung von MRF ohne Öl oder anderes Flüssiges als Trägermedium muss sichergestellt werden, dass kein Wasser in der Bremskammer (MR-Raum oder MRF-Raum) kondensiert. Z. B. kann Kieselsäuregel (bekannt als Silikagel) oder ein anderes Trocknungsmittel dazu gemischt werden, welches Wasser absorbiert und so seiner Umgebung Feuchtigkeit entzieht.

Wird Pulver ohne Trägerflüssigkeit verwendet, sind bis zu etwa 80 Volumenprozent Carbonyleisen (Eisenpulver) möglich, was das Bremsmoment stark erhöht, wenn die restlichen Auslegungsparameter darauf angepasst werden (z.B. sollte die Feldstärke pro Partikel hierbei in etwas gleichbleiben wie bei einer magnetorheologischen Flüssigkeit (MRF), d.h. die Feldstärke im Bremsspalt bzw. Wirkspalt sollte beim Wechsel von z.B. LORD MRF 140 (40 Volumenprozent Carbonyleisen mit z.B. Öl als Trägerflüssigkeit) zu 80% Carbonyleisenpulver (ohne Trägerflüssigkeit) doppelt so hoch sein. Wir sprechen hier von magnetischen Feldstärke im Spalt von größer 200 kA/m bis auf Werte von bis zu 1.000 kA/m (1000000 A/m) oder mehr. Ein weiterer Vorteil von Pulver als Medium im Wirkspalt ist, dass es so zu keiner Sedimentation und auch keiner Haufenbildung im Sinne von "die Eisenpartikel bei MR-Flüssigkeiten werden in Richtung des Magnetfeldgradienten gezogen (die Kraft auf magnetisierbare Partikel wirkt immer in Richtung des stärkeren Magnetfelds, das Trägermedium wird verdrängt)" kommen muss, um so hohe Partikelkonzentrationen zu erhalten. Die maximale Partikelkonzentration liegt so schon an. Dies verbessert die Reproduzierbarkeit der Momente (es stellt sich bei gleichem Strom immer ein ähnliches Bremsmoment ein).

In allen Ausgestaltungen ist es besonders bevorzugt, dass die magnetisch polarisierbaren Partikel (zu einem erheblichen Teil) unrunde Partikel umfassen (nicht sphärische Partikel), bei denen ein Verhältnis von größtem Durchmesser zur größten Quererstreckung senkrecht dazu größer 1,25 oder 1,5 beträgt. Möglich ist die Bildung dieses Verhältnisses auch als ein Verhältnis von größter Längserstreckung zur größten Quererstreckung, wobei insbesondere die Längs- und Quererstreckungen senkrecht zueinander gemessen werden.

Der Einsatz von unrunden Partikeln ist besonders vorteilhaft, da diese eine effektive Verkantungsstruktur ermöglichen, da sich jeweils unterschiedliche unrunde Abschnitte der Partikel miteinander verklemmen bzw. miteinander verkeilen.

Möglich und bevorzugt sind auch Verhältnisse von größtem Durchmesser zu größter Quererstreckung senkrecht dazu von 1,75 oder 2,0 oder mehr.

Vorzugsweise ist wenigstens ein Teil der magnetisch polarisierbaren Partikel dazu ausgebildet, sich unter dem Einfluss des Magnetfeldes flächig miteinander zu verklemmen oder zu verkeilen. Das ist beispielsweise bei Partikeln möglich, die abschnittsweise eckig oder beispielsweise insgesamt dreieckig oder mehreckig oder dergleichen ausgebildet sind. Dann verklemmen zwei (oder mehr) entsprechend ausgestaltete Partikel miteinander und können eine sehr effektive Verklumpung der Partikel miteinander und Verklemmung und Abbremsung der beiden Brems- bzw. Kupplungskomponenten miteinander bewirken.

Vorzugsweise ist wenigstens ein Teil der magnetisch polarisierbaren Partikel dazu ausgebildet, sich unter dem Einfluss des Magnetfeldes an zwei oder mehr voneinander beabstandeten Stellen miteinander zu verklemmen bzw. zu verkeilen. Solche Partikel, die unrund ausgestaltet sind, erlauben eine sehr effektive Erhöhung der Bremskraft bzw. des Bremsmomentes, da sie im Unterschied zu sphärischen Partikeln sich nicht nur an einer Stelle bzw. in einem kleinen Winkelbereich berühren, sondern an mehreren Stellen oder sogar flächig.

Vorzugsweise weist wenigstens ein Teil der magnetisch polarisierbaren Partikel wenigstens einen Muldenabschnitt auf. Ein solcher nach innen gewölbter Muldenabschnitt erlaubt eine besonders effektive Verkeilung mit Teilen anderer Partikel.

Vorzugsweise ist wenigstens eine an den Bremsspalt angrenzende Oberfläche wenigstens einer Kupplungs- bzw. Bremskomponente wenigstens abschnittsweise unglatt oder (lokal) uneben ausgebildet. Möglich ist es auch, dass die Partikel oder ein erheblicher Teil der magnetisch polarisierbaren Partikel regelmäßig oder unregelmäßig auf der äußeren Oberfläche Erhebungen oder Erhöhungen und/oder Vertiefungen aufweisen. Dadurch kann eine Verkantung mit den Partikeln verstärkt werden. Beispielsweise kann wenigstens eine Oberfläche Erhöhungen und/oder Vertiefungen in der Art von spitz oder abgerundet ausgebildeten Dimpels bei Golfbällen aufweisen. Möglich ist auch eine Oberfläche mit einem spitz oder abgerundet ausgebildetem Sägezahnprofil. Eine relative Höhe (wenigstens einiger) der Erhebungen oder Vertiefungen beträgt vorzugsweise wenigstens 5% oder 10% des minimalen Durchmessers eines magnetisch polarisierbaren Partikels.

Es hat sich herausgestellt, dass eine besonders effektive Verkantung und Verklemmung einzelner Partikel mit hohen magnetischen Feldstärken erzeugbar ist. Dazu wird vorzugsweise eine magnetische Feldstärke von größer als 150 Kiloampere/Meter (kA/m) oder von 250 Kiloampere/Meter oder 500 kA/m oder mehr in dem Spalt erzeugt. Insbesondere ist eine magnetische Feldstärke von größer als 500 Kiloampere/Meter (kA/m) oder von 750 Kiloampere/Meter oder 1000 kA/m oder mehr in dem Spalt, vorzugsweise in wenigstens einem der Bremsspaltabschnitte, erzeugbar bzw. wird dort erzeugt.

Wenn nur Pulver ohne flüssiges Trägermedium verwendet wird, kann die eine andere Dichtungsart gewählt und die Grundreibung dadurch verringert werden. Die Dichtung muss nicht so stark an die Oberflächen gepresst werden, da nicht für Flüssigkeiten abgedichtet werden muss, sondern nur Partikel. Es kann auch z.B. berührungsfreie Wellendichtung wie eine Labyrinthdichtung verwendet werden. Diese Art von Dichtung liegt nur auf einem der beiden zueinander drehenden Teile auf. Zusätzlich ist die Temperaturabhängigkeit verringert bzw. fast aufgehoben. Flüssige Trägermedien verändern ihre Viskosität mit sich verändernden Temperaturen, während Carbonyleisenpulver in sehr großen Temperaturbereichen seine Eigenschaften kaum ändert (bis zum Erreichen der Curie-Temperatur). Die temperaturbedingte Volumensänderung ist bei Pulver auch vernachlässigbar, da sich die Partikel untereinander umverteilen können, wenn sich das Volumen der einzelnen Partikel verändert.

Der maximale Volumensanteil von Carbonyleisenpartikeln ist in Pulverform (ca. 74%) auch höher als in MRF mit z.B. Öl als Trägermedium.

Die magnetorheologischen Partikel 19 verketten sich bei angelegtem Magnetfeld, wie in Figur 3c links sehr schematisch abgebildet. Dadurch tritt ein Keileffekt auf, der bei geringen und mittleren Drehzahlen zu einer erheblichen Verstärkung des Bremsmomentes führt.

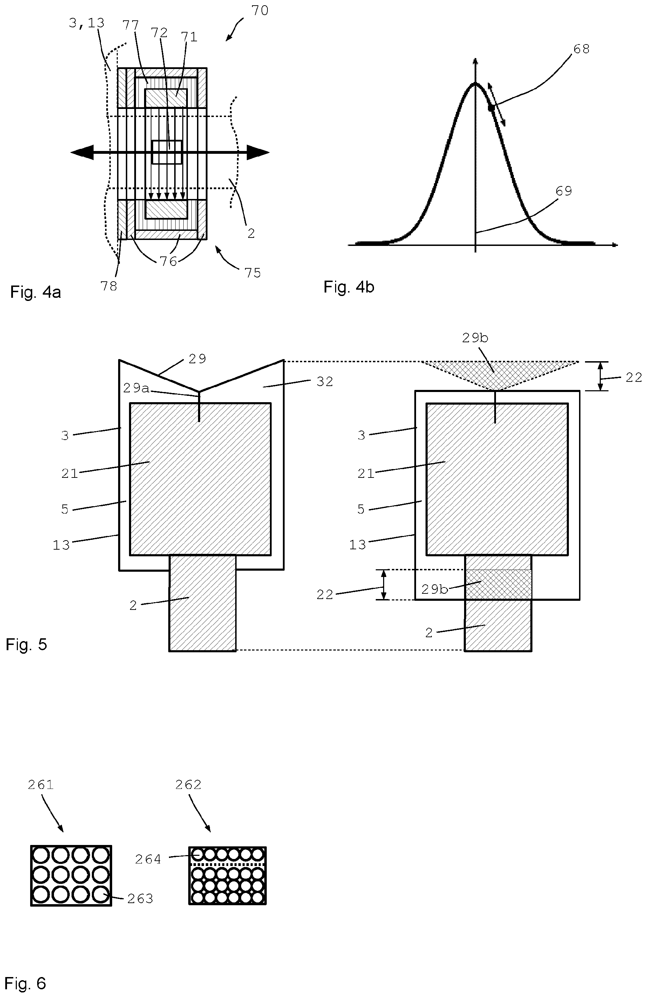

Zur näheren Erläuterung dieses Effekts wird auf die Figur 4 der internationalen Anmeldung WO 2018/215350 A1 der Anmelderin verwiesen, die bezüglich der Erklärung des Effekts in angepasster Weise vollständig in den Offenbarungsumfang dieser Anmeldung aufgenommen wird.

In Figur 3c rechts abgebildet ist ein Querschnitt durch den ersten oder auch den dritten Bremsspaltabschnitt 5a, 5c in dem Bereich der Scheibenkontur 41. Die Scheibenkontur 41 stellt einen Scheibenkörper 42 zu Verfügung, der hier auf den Kern 21 aufgebracht ist oder einstückig als Ringflansch daran ausgebildet ist. Radial außen zwischen der Außenkontur der Scheibenkontur 41 und dem Innenumfang des Mantelteils 13 ergibt sich eine Spalthöhe 41b, die erheblich geringer ist und erheblich geringer gewählt werden kann als der radiale Freiraum 11c in dem zweiten Bremsspaltabschnitt 5b. Der Scheibenkörper 42 kann massiv gestaltet sein oder kann als Scheibenpaket 44 ausgebildet sein und eine Mehrzahl von Scheibenblechen 46 umfassen. Der erste und der dritte Bremsspaltabschnitt 5a, 5c können grundsätzlich identische oder ähnliche Querschnitte aufweisen.

Nur beispielhaft ist in dem rechten Teil von Figur 3c ein Wälzkörper 11 gestrichelt abgebildet, um die Unterschiede zu verdeutlichen. Klar erkennbar ist, dass bei dem Scheibenkörper 42 einer Spalthöhe 41b mit geringerer Höhe ermöglicht wird. Dadurch kann dort ein starkes Bremsmoment und eine hohe Magnetfeldstärke erreicht und übertragen werden. Unabhängig kann über die andere elektrische Spule in dem zweiten Bremsspaltabschnitt 5b eine gewünschte Magnetfeldstärke und Bremswirkung eingestellt werden. Beide Magnetfelder werden über den dritten Bremsspaltabschnitt 5c geschlossen.

In der Mitte von Fig. 3c ist ein Querschnitt einer weiteren Ausführungsform eines Bremsspaltabschnitts dargestellt. Dieser Bremsspaltabschnitt weist eine als Sternkontur 40 ausgebildete Scheibenkontur 41 auf. Die Sternkontur 40 weist eine unrunde Umfangsfläche auf. Dadurch entsteht ein Bremsspaltabschnitt mit über dem Umfang variabler Spalthöhe 40c. Dadurch kann auch eine Art Keileffekt entstehen und insbesondere bei geringen Drehzahlen ein hohes Drehmoment eingestellt werden. Die radial nach außen (oder nach innen) abstehenden Elemente können als Magnetfeldkonzentratoren 80 bezeichnet werden, die lokal das Magnetfeld konzentrieren. Eine Sternkontur 40 kann auch als Scheibenpaket 44 ausgebildet sein und mehrere (z. B. sternförmige) Scheibenbleche 46 umfassen.

Eine Sternkontur kann auch in axialer Richtung ausgebildet sein, das bedeutet, dass in axialer Richtung variable Spalthöhen auftreten. Dadurch kann das Magnetfeld in axialer Richtung an Orten mit geringerer Spalthöhe konzentriert werden, und in den höheren Spalten verringert werden. Auch eine Mischung aus "radialen" und "axialen" oder/und schrägen Sternkonturen ist denkbar.

Insbesondere eignet sich diese Ausgestaltung für den zweiten Bremsspaltabschnitt 5b als Ersatz für einen (zweiten) Bremsspaltabschnitt (5b) mit Wälzkörpern.

In Figur 4a ist die Sensoreinrichtung 70 im Detail dargestellt. Die erste Bremskomponente 2 und die hier als Mantelteil 13 ausgeführte zweite Bremskomponente 3 sind nur angedeutet (gestrichelte Linien). Die Sensoreinrichtung 70 stützt sich über die Entkopplungseinrichtung 78 an der drehbaren zweiten Bremskomponente magnetisch entkoppelt ab. Die Abschirmeinrichtung 75 besteht hier aus drei Abschirmkörpern 76, welche die Streuung des magnetischen Feldes 8 der elektrischen Spule 26 vermindern. Die Abschirmeinrichtung 75 kann auch nur aus topfförmigen Körpern oder einem topfförmigen Körper und einem scheibenförmigen Körper bestehen, die miteinander verbunden sind.

Darüber hinaus ist außerdem noch eine Trenneinheit 77 zur magnetischen Trennung vorhanden. Die Magnetringeinheit 71 wird zum Messen der Orientierung bzw. des Drehwinkels der magnetorheologischen Bremseinrichtung 1 genutzt. Der Magnetfeldsensor 72 ist innerhalb der in diesem Bereich nicht magnetisch ausgebildeten ersten Bremskomponente 2 angeordnet. Kleine relative axiale Verschiebungen, wie sie zum Beispiel durch Betätigen einer Schnappscheibe bewirkt werden, können dazu genutzt werden, um das Betätigen des Bedienknopfs 101 zu detektieren, wie Figur 4b zeigt. Der Drehwinkel und die Orientierung der durch Pfeile eingezeichneten Magnetfeldlinien kann durch den Magnetfeldsensor 72 erfasst werden.

Durch eine axiale Verschiebung verändert sich das empfangene Signal 68 der Sensoreinrichtung 70 gemäß der Darstellung von Figur 4b. Figur 4b zeigt den Verlauf der Amplitude 69 des durch den Magnetfeldsensor 72 detektierten Signals 68 in Abhängigkeit zur axialen Verschiebung der Bremskomponenten 2, 3 relativ zueinander. Durch eine axiale Verschiebung des Magnetfeldsensors 72 gegenüber der Magnetringeinheit 71 verändert sich die Amplitude 69 des detektierten Signals 68. Eine axiale Verschiebung bzw. ein Herunterdrücken eines Bedienknopfs 101 kann so erfasst werden.

Mit dem gleichen Sensor 72 kann auch der Drehwinkel erfasst werden, wobei zur Erfassung des Drehwinkels die Richtung des Magnetfeldes 8 (eingezeichnete Pfeile) ermittelt wird. Die Intensität bestimmt die axiale Position. Aus einer Veränderung des Signals 68 kann deshalb auf eine Betätigung eines Tasters bzw. der Schnappscheibe 29 zurückgeschlossen werden. Das ist vorteilhaft, da ein einziger (mehrdimensionaler) Hallsensor zur Bestimmung der Winkelposition und der Bestimmung einer Axialposition verwendet werden kann.

Figur 6 zeigt rein schematisch zwei unterschiedlich ausgebildete elektrische Spulen 261, 262, wobei sich die Anzahl der Wicklungen unterscheiden kann. Auch die Größe/Art der Durchmesser und Form und Material der Drähte 263, 264 kann unterschiedlich sein. Die Größe und äußere Form der elektrischen Spulen 261, 262 kann dabei gleich sein (mit durchgezogener Linie dargestellt) oder auch unterschiedlich sein, so kann die zweite elektrische Spule 262 auch z.B. einen kleineren Querschnitt aufweisen, wie mit gestrichelter Linie eingezeichnet. Dadurch können an den Magnetkreisläufen unterschiedliche Eigenschaften eingestellt werden. Ein Magnetkreislauf kann auf eine schnellere Reaktionsgeschwindigkeit und/oder ein höheres Bremsmoment ausgerichtet sein, während der andere in der Bremseigenschaft besser und/oder Energieeffizienter ausgebildet sein kann. Es können unterschiedlichste Eigenschaftskombinationen erreicht werden. Auch das Material an den Bremsspaltabschnitten kann unterschiedlich sein.

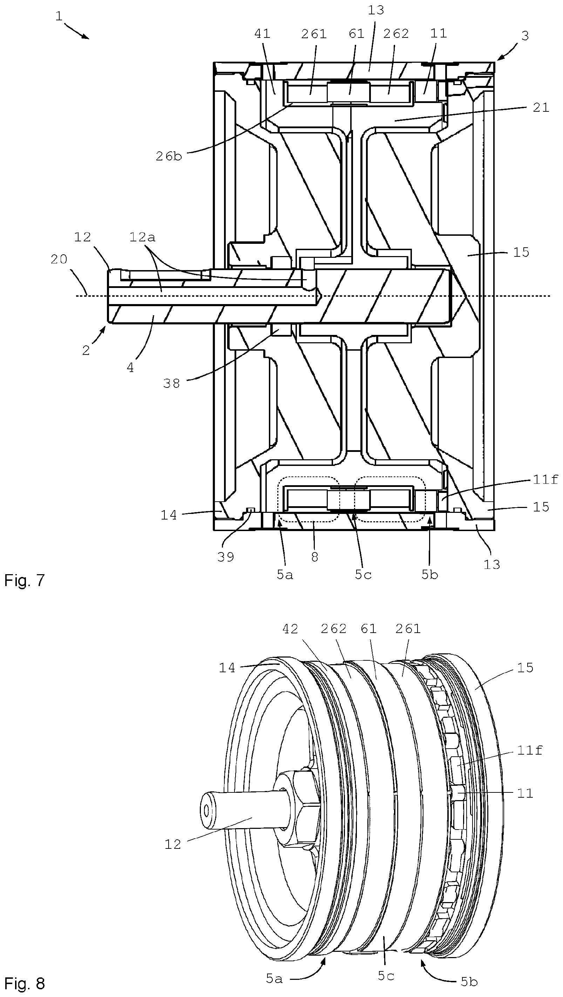

Figur 7 zeigt einen schematischen Querschnitt einer weiteren Bremseinrichtung 1, wobei die erste Bremskomponente 2 an einem als Achse 12 ausgebildeten Halter 4 aufgenommen ist. Auch bei dieser Ausgestaltung sind drei Bremsspaltabschnitte 5a, 5b, 5c vorgesehen, wobei an dem ersten Bremsspaltabschnitt 5a eine Scheibenkontur 41 ausgebildet ist und an dem zweiten Bremsspaltabschnitt 5b Wälzkörper 11 bzw. Drehkörper auf dem Umfang des Kerns 21 aufgenommen sind. Die Wälzkörper 11 werden über Halterungen 11f geführt.

Im Inneren kann ein Reservoir 32 für magnetorheologische Partikel vorhanden sein, um eine ausreichende Versorgung der Bremsspaltabschnitte mit magnetorheologischen Partikeln zu gewährleisten. Insbesondere werden Carbonyleisenpartikel aus der Umgebung angezogen und im Magnetfeldübergangsbereich konzentriert.

In Figur 7 ist am vorderen (linken) Ende ein Deckel 14 und am hinteren Ende ein Deckel 15 angebracht.

Der Scheibenkörper 41 ist hier einstückig mit dem Kern 21 ausgebildet, kann aber auch als Scheibenpaket 44 mit mehreren Scheibenblechen 46 ausgebildet sein.

An der hohl ausgebildeten Achse 12 ist eine Kabeldurchführung 12a ausgebildet, durch welche die Kabel zur Versorgung der beiden elektrischen Spulen 261 und 261 durchgeführt werden. An dem Innenteil ist der (separate) Kern 21 aufgenommen. Auf dem Kern 21 sind die beiden elektrischen Spulen 261 und 262 an Spulenhaltern 26b gewickelt. Zwischen den beiden elektrischen Spulen 261 und 262 ist die Ringkontur 61 für den dritten Bremsspaltabschnitt 5c aufgenommen oder ausgebildet. In einfachen Ausgestaltungen ist die Ringkontur 61 als separates Teil auf den Kern 21 aufgebracht und stellt einen dünnen Spalt zwischen der Außenseite der Ringkontur 61 und dem Innenumfang des Mantelteils 13 zur Verfügung. Der dritte Bremsspaltabschnitt 5c dient zum Schließen der beiden Magnetfelder der beiden elektrischen Spulen 261 und 262.

Das Magnetfeld der ersten elektrischen Spule 261 verläuft im Wesentlichen radial durch den ersten Bremsspaltabschnitt 5a und den dritten Bremsspaltabschnitt 5c und axial durch den Kern 21 sowie das Mantelteil 13. Das Magnetfeld der zweiten elektrischen Spule 262 verläuft im Wesentlichen radial durch den zweiten Bremsspaltabschnitt 5b und den dritten Bremsspaltabschnitt 5c und axial durch den Kern 21 sowie das Mantelteil 13. Die beiden elektrischen Spulen 261, 262 sind so gewickelt und werden so bestromt, dass die Magnetfelder der beiden elektrischen Spulen 261, 262 im Bereich des dritten Bremsspaltabschnitts 5c in die gleiche Richtung verlaufen, wie auch schematisch in Fig. 3b dargestellt.

Insgesamt wird eine sehr kostengünstig herstellbare Bremseinrichtung 1 zur Verfügung gestellt, wobei gegebenenfalls durch eine "Lagerung" über die Scheibenkontur 41 wenigstens ein Lager eingespart werden kann, wodurch auch die Bauhöhe reduziert wird. Es wird eine sehr geringere Grundreibung erreicht. Dadurch, dass weniger Teile verwendet werden, wird die Herstellung einfacher und kostengünstiger. Durch eine geringere Teileanzahl werden auch die Toleranzanforderungen verbessert, da Toleranzenketten vermieden werden.

Mit den beiden elektrischen Spulen 261, 262 kann jeweils separat ein Bremsmoment eingestellt werden.

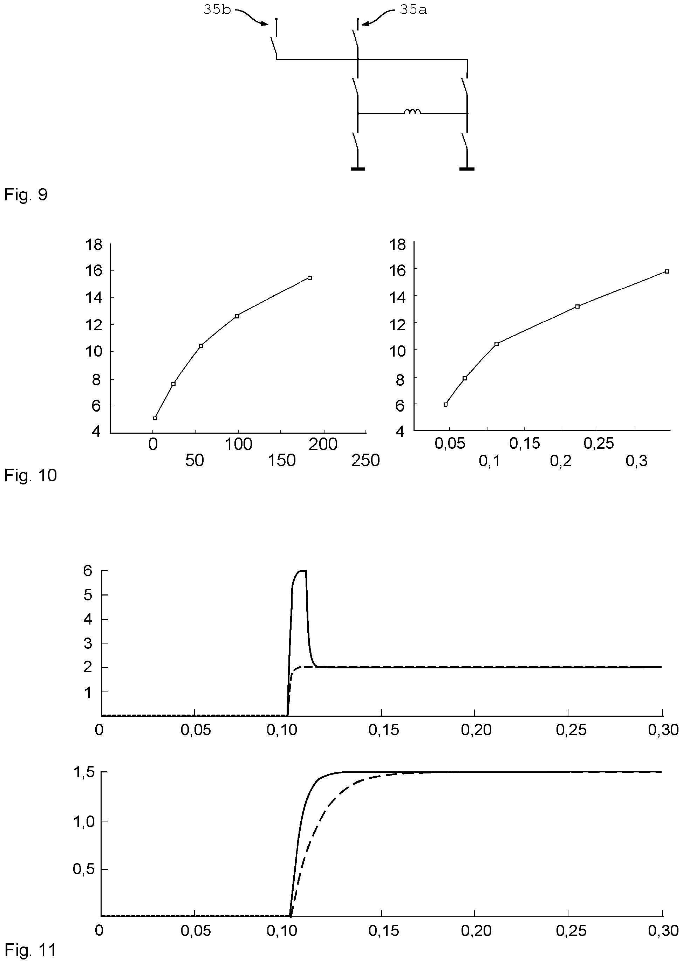

Figur 9 zeigt schematisch eine Schaltung zur schnellen Ansteuerung der elektrischen Spule 26. Die elektrische Spule 26 (Magnetspule) wird hier durch eine H-Schaltung angesteuert. Diese ist in der Figur 9 nur durch Schalter angedeutet. Eine im Normalbetrieb bzw. im Dauerbetrieb eingesetzte Spannungsquelle 35a mit geringerer Spannung von z. B. 12V liefert die Spannung für den normalen Betrieb. Für die Spannungsspitzen wird über einen Schalter eine Spannungsquelle 35b mit höherer Spannung von z.B. 18V oder 24V dazu geschaltet. Dann wird die Spannungsquelle 35a mit niedrigerer Spannung zeitweise getrennt. Nach dem Erreichen des maximalen Stroms wird die Spannungsquelle 35b mit höherer Spannung wieder von der Schaltung und der elektrischen Spule 26 getrennt und es wird wieder die Spannungsquelle 35a mit niedriger Spannung angeschlossen. Die Schalter können dabei beliebige elektrische Bauteile sein, die insbesondere in der Lage sind, im Millisekunden-Bereich zu koppeln und entkoppeln.

Dadurch erreicht der Strom in der elektrischen Spule 26 schneller den gewünschten Wert. In einem konkreten Fall wird die gewünschte Stromstärke innerhalb von 10ms anstatt von 40ms erreicht. Der Wechsel zwischen den Spannungen kann über eine elektrische Schaltung erfolgen.

Figur 10 zeigt in schematischer Darstellung zwei erzeugte Bremsmomentverläufe, wobei das erzeugte Bremsmoment (normiert und deshalb hier dimensionslos) über der elektrisch eingebrachten Leistung (normiert und deshalb hier dimensionslos) aufgetragen ist. Links ist der Verlauf für einen BLDC-Motor ("brushless direct current-Motor") und rechts der Verlauf für eine magnetorheologische Bremseinrichtung abgebildet. Es ist erkennbar, dass für das gleiche Bremsmoment der elektrische Motor erheblich mehr Strom benötigt als die magnetorheologische Bremseinrichtung. Für ein Bremsmoment von "14" benötigt der elektrische Motor mehr als "130" normierte Leistung, während die magnetorheologische Bremseinrichtung (deutlich) eine Leistung von weniger als "0,3" benötigt. Das Verhältnis der Leistungsaufnahmen ist größer als 100:1 und liegt hier bei etwa 500:1.

Magnetorheologische Kupplungseinrichtungen und Bremsen haben u.a. den Vorteil, dass sie zum Kuppeln bzw. zur Dämpfung von Bewegungen nur wenig Strom benötigen, leise sind, wenig Wärme erzeugen und sehr schnell reagieren (~ms) etc. Der geringe Strombedarf ist besonders vorteilhaft bei batteriebetriebenen Komponenten wie z. B. Elektrofahrzeugen, bei denen sich der Stromverbrauch aller Komponenten automatisch stark in der Reichweite der Fahrzeuge niederschlägt. Aber auch bei Fahrzeugen mit Verbrennungsmotor oder elektrischen Geräten im Allgemeinen ist der Stromverbrauch ein Thema.

Das System benötigt viel weniger Strom als eine Ansteuerung allein über einen Elektromotor. Generell gilt für elektrisch angetriebene Kraftfahrzeuge derzeit, dass man etwa 6 km weit mit einer 1 kWh kommt, während eine kWh Batteriekapazität ca. 230 Euro kostet, wobei eine kWh Batteriekapazität ca. 6 kg Mehrgewicht verursacht. Auch wenn sich diese Daten in Zukunft ändern werden, wird der Energiebedarf weiterhin eine wichtige Rolle spielen.Figur 11 zeigt die sich ergebenden Bremsmomentverläufe einer magnetorheologischen Bremseinrichtung 1 für zwei unterschiedliche Stromstärkenverläufe über der Zeit. Dabei stellt die gestrichelte Kurve in der oberen Hälfte der Abbildung den konventionellen Verlauf dar, bei dem die Stromstärke direkt auf die angestrebte Stromstärke erhöht wird.

Hier wird zum Zeitpunkt 0,1 Sekunden die Stromstärke von 0 Ampere auf 2 Ampere erhöht. Der resultierende Verlauf des Bremsmomentes bzw. der Kopplungsintensität ist in der unteren Hälfte von Figur 13 gestrichelt dargestellt. Das übertragbare Bremsmoment erhöht sich bei der gestrichelten Kurve von dem Startzeitpunkt bei 0,1 Sekunden innerhalb von etwa 25 Millisekunden (Zeitpunkt 0,125 Sekunden) auf einen abgelesenen Wert von etwa 1,25 (normiert auf z.B. eine mittleeren Wert oder eine Normeinheit) und erreicht nach etwa 75 Millisekunden (Zeitpunkt 0,175 Sekunden) asymptotisch (nahezu) den eingestellten Grenzwert von etwa 1,5.

Wird hingegen zu Beginn des Kupplungs- bzw. dem Start des Bremsvorgangs die Stromstärke dreifach auf z. B. hier 6 Ampere erhöht, wie es die durchgezogenen Linien zeigen, erhöht sich das Bremsmoment erheblich stärker und erreicht schon nach etwa 10 Millisekunden den Endwert von 1,5. Dabei wird der "Stromboost" mit erhöhter Stromstärke hier nur für etwa 10 ms aktiviert. Danach wird, wie die obere durchgezogene Kurve zeigt, die Stromstärke auf 2 Ampere reduziert. Über die kurzzeitige Erhöhung der Stromstärke ("Stromboost") kann eine deutliche schnellere Einstellung des Kupplungs- oder Bremsmomentes erfolgen. Das ist in mehrerlei Hinsicht sehr vorteilhaft, da ein schnelles Stehenbleiben und ein direkteres haptisches Gefühl erfahrbar ist.

Ein großer Vorteil der Konstruktion ist, dass außen keine Kabel, kein Sensor und keine Elektronik nötig sind. Somit ist bei allen Ausgestaltungen eine hohe IP Klasse möglich. Im Prinzip liegt alles hinter einer Montageblende.

Die elektrischen Spulen sind vorzugsweise komplett von dem Raum mit dem magnetorheologischen Medium abgetrennt, insbesondere über eine Vergussmasse.

In bevorzugten Ausgestaltungen ist eine axiale Verschiebung möglich, wobei insbesondere ein Flüssigkeitsvolumen im inneren verschoben wird. Zwischen einem Deckel und einer Scheibenkontur ist vorzugsweise genügend Raum vorgesehen, damit das dazwischenliegende Medium (oder Flüssigkeit) (Carbonyl) nicht verdichtet wird. (Das könnte sonst zu hohen axialen Verstellkräften führen.) Dadurch wird ein zusätzliches MRF-Reservoir bereitgestellt, aus dem Partikel in den Bereich der Scheibenkontur bzw. der Wälzkörper nachfließen können. Magnetische Partikel fließen nämlich immer in Richtung des stärkeren Felds, da magnetische Partikel von dem Magnetfeldgradienten angezogen werden.

Die Dichtung läuft vorzugsweise auf der Achse. Es gibt eine Rotationsbewegung (mehr als 100.000 Umdrehungen sind möglich) und es kann eine Linearbewegung für den Taster geben. Damit die Dichtung nicht einläuft und eine Laufrille bildet und damit die Reibung gering ist und die Leckage (Schleppöl) über die Lebensdauer nicht zu hoch wird, ist eine entsprechende Werkstoffpaarung mit einer harten Lauffläche bevorzugt.

Vorzugsweise wird der erste Bremsspaltabschnitt 5a mit einer Scheibenkontur ausgerüstet. Der zweite Bremsspaltabschnitt 5b wird insbesondere mit Wälzkörpern und insbesondere Walzen ausgerüstet. Wälzkörper und insbesondere Walzen mit einem runden Innenring ermöglichen ein hohes statisches Moment. Eine Scheibenkontur ermöglicht eine gute Magnetfeldweiterleitung und ein hohes Moment bei hohen Drehzahlen.

Die kombinierte Lösung, auch Hybridlösung genannt, kombiniert beide Vorteile. Ein axialer Übergang des Magnetfeldes hatte im Stand der Technik hingegen eine kleinere Übergangsfläche und ergab so geringere Bremsmomente. Außerdem hat ein axialer Magnetfeldübergang einen geringeren Abstand (Radius) und erzeugt schon daher weniger Moment. Ein ebenfalls radialer Bremsspaltabschnitt 5a mit einer Scheibenkontur hat demgegenüber einen größeren Durchmesser und erzeugt damit bei gleicher Kraft ein größeres Moment. Außerdem ist die Fläche größer, da der größere Umfang eine größere Fläche aufspannt. Wenn die Breite der Konturscheibe größer ist, als 1/6 des Durchmessers, ist das übertragbare Bremsmoment am (umfänglichen) radialen Bremsspaltabschnitt schon größer als das maximal übertragbare Bremsmoment auf der axialen Fläche! Schließlich sind durch die geringere Spalthöhe an der Scheibenkontur die magnetischen Verluste kleiner. Alles das bewirkt ein höheres Bremsmoment auch bei höheren Drehzahlen.

Ein Volumenausgleich für die Push-Funktion kann durch eine Membran am Ende des Mantelteils bereitgestellt werden. Hinter der Membran ist ein Klickelement wie eine Schnappscheibe ("Snap Dome"). Dieses gibt einen haptisch fühlbaren Druckpunkt. Zusätzlich hört man das Klicken beim Erreichen des Druckpunktes und die Schnappscheibe drückt den gesamten Knopf bzw. das Mantelteil wieder in die Ausgangsstellung zurück (ähnlich einer Maustaste bei Computermaus).

Die Membran dichtet dann den MRF-Raum ab. Das Volumen hinter der Membran wirkt als Volumenausgleich beim Drücken. In der Normalstellung weist die Schnappscheibe eine Wölbung auf. Wird der Knopf in axialer Richtung verschoben, drückt der Stator der Bremseinrichtung gegen die Membran und die Schnappscheibe. Diese wird dadurch flach gedrückt.

Als transparentes Material kann normales Glas verwendet werden, oder PMMA (Acrylglas). Der Vorteil von PMMA ist, dass man milchiges Glas verwenden kann, welches das Licht innerhalb bricht und so die Gesamte Oberfläche gleichmäßig ausleuchten kann. Zur Beleuchtung können eine oder mehrere LEDs verwendet werden, auch mit verschiedenen Farben.

In allen Ausgestaltungen kann auch die äußere Bremskomponente drehfest ausgeführt sein und die innere Bremskomponente die drehbare Komponente sein. In dem Fall muss die elektrische Kontaktierung der elektrischen Spule über Leitungen durch die äußere Bremskomponente erfolgen oder z. B. über Schleifkontakte.

Mit der hier vorgestellten Erfindung kann der geforderte Arbeitsbereich der Lenkeinrichtung 100 in mehrere Teilbereiche unterteilt werden. Ein erster Teilbereich wird durch die Antriebseinrichtung 307 bereitgestellt und bietet ein aktives Antriebsmoment z. B. zwischen 0 und 8 Newtonmeter. Ein zweiter Teilbereich wird durch den ersten Bremsspaltabschnitt 5a bereitgestellt und bietet ein Bremsmoment z. B. zwischen 0 und 5 Newtonmeter. Ein dritter Teilbereich wird durch den zweiten Bremsspaltabschnitt 5b bereitgestellt und bietet ein Bremsmoment z. B. zwischen 0 und 25 Newtonmeter. Dabei kann aufgrund der Scheibenkontur 41 im ersten Bremsspaltabschnitt 5a eine besonders hohe Regelgüte für den ersten Teilbereich erzielt werden. Da dieser Teilbereich für die Lenkpräzision besonders entscheidend ist, wirkt sich die hohe Regelgüte hier besonders vorteilhaft auf das Lenkverhalten aus.

Die hier vorgestellte Lenkeinrichtung 100 hat zudem den Vorteil, dass das notwendige aktive Moment (Antriebsmoment) durch einen kompakten und agilen Elektromotor mit hoher Regelgüte und geringerem Stromverbrauch (besserer Wirkungsgrad im Teillastbereich) erzielt werden kann. Das geforderte niedrige passive Moment (Bremsmoment zum Beispiel bis 8 Newtonmeter) wird hier durch den ersten Bremsspaltabschnitt 5a mit besonders geringer Grundreibung und hoher Regelgüte bei gleichzeitig geringem Stromverbrauch erzielt. Das geforderte höhere passive Moment (Bremsmoment zum Beispiel bis 25 Newtonmeter) wird hier mit dem zweiten Bremsspaltabschnitt 5b mit ebenfalls besonders geringer Grundreibung und normaler Regelgüte bei gleichzeitig geringem Stromverbrauch erzielt. Dadurch ergibt sich eine dreifache Redundanz.

Zugleich kann die Lenkbewegung geräuschlos und ruckelfrei beeinflusst werden. Zudem kann die Bremseinrichtung 1 bei einer Fehlfunktion der Antriebseinrichtung 307 deren aktives Moment einbremsen. Zudem kann durch die Bremseinrichtung 1 eine Motorkurve (schwankendes Drehmoment über den Drehwinkel) geglättet bzw. ausgeregelt werden. Zudem braucht die Bremseinrichtung 1 erheblich weniger Strom als ein Elektromotor zur Erzeugung eines vergleichbaren Bremsmoments.

Die vorgestellte Lenkeinrichtung kann auch in Kombination mit dem Bordcomputer, Anzeigeinstrument oder einem Head-up Display als Spielekonsole bzw. als Fahr- oder Flugsimulator verwendet werden. Wenn das Fahrzeug geparkt wird (z.B. bei Elektronfahrzeugen beim Ladevorgang)oder das Auto einen selbstfahrenden Modus besitzt, kann der Benutzer die Lenkeinrichtung als Eingabegerät eines Computerspiels verwenden. Beim Wechsel vom Gamingmode zum realen Fahrbetrieb wird vorzugsweise ein haptisches Feedback ausgegeben.

Bestimmte Parameter der Lenkeinrichtung können auch über den Bordcomputer oder andere Eingabegeräte kundespezifisch, innerhalb von Systemgrenzen, eingestellt bzw. konfiguriert bzw. gespeichert werden (Individualisierung). Ein Abruf der individuellen Einstellungen ist mittels Schlüsselerkennung, Smartphone- oder Smartdevicekommunikation, Fahrererkennung (Bilderkennung; Gesichtserkennung), Gestensteuerung, Sprachsteuerung, Datenanalyse oder händischer Eingabe möglich.

### Bezugszeichenliste:

| | | | |
|---|---|---|---|
| 1 | Magnetorheologische Bremseinrichtung | 39 | O-Ring |
| | | 40 | Sternkontur |
| 2, 3 | Bremskomponente | 40c | Spalthöhe |
| 4 | Halter | 41 | Scheibenkontur |
| 5 | Spalt | 41a | integraler Ringflansch |
| 5a | Bremsspaltabschnitt für 41 | 41b | Spalthöhe von 5a |
| 5b | Bremsspaltabschnitt für 11 | 41e | axiale Breite von 5a |
| 5c | Bremsspaltabschnitt für 61 | 42 | Ringkörper, Scheibenkörper |
| 5d | Bremsspaltabschnitt | 42a | Aufnahme |
| 6 | Medium | 43 | Benutzerschnittstelle |
| 8 | Magnetfeld, Feld | 44 | Scheibenpaket |
| 11 | Wälzkörper | 45 | Kabel |
| 11b | Spalthöhe von 5b | 46 | Scheibenblech |
| 11c | radialer Freiraum bei 5b | 47 | ausgebauchte Außenkontur |
| 11d | Durchmesser von 11 | 48 | Befüllschraube |
| 11e | axiale Breite von 11 | 49 | Überzug |
| 11f | Halterung | 50 | Konsole |
| 12 | Achse | 51 | Mutter |
| 12a | Kabeldurchführung | 61 | Ringkontur |
| 13 | Mantelteil | 68 | Signal |
| 14 | Abschluss, Deckel | 69 | Amplitude |
| 15 | Abschluss, Deckel | 70 | Sensoreinrichtung |
| 16 | Stift | 71 | Magnetringeinheit |
| 18 | Leuchtmittel | 72 | Magnetfeldsensor |
| 19 | magnetische Partikel | 75 | Abschirmeinrichtung |
| 20 | Rotationsachse, axiale Richtung | 76 | Abschirmkörper |
| | | 77 | Trenneinheit |
| 21 | Kern | 78 | Entkopplungseinrichtung |
| 22 | Hub | 79 | Sensorplatine |
| 23 | Drehknopf | 79a | Kontaktpin |
| 26 | Spule | 80 | Magnetfeldkonzentrator |
| 26b | Spulenhalter | 100 | Lenkeinrichtung |
| 26e | axiale Breite | 101 | Bedienkopf |
| 28 | Vergussmasse | 102 | Bedienwalze |
| 29 | Schnappscheibe | 110 | geschlossene Kammer |
| 29a | Führung | 200 | Gerätekomponente |
| 29b | Volumen | 261 | elektrische Spule |
| 31 | Membrane | 262 | elektrische Spule |
| 32 | Reservoir | 263 | Draht |
| 35a | Spannungsversorgung 12V | 264 | Draht |
| 35b | Spannungsversorgung 18V | 301 | Lenkeinheit |
| 38 | Dichtung | 302 | Lenkungssteuergerät |
| 303 | Aktuatoreinrichtung | 311 | Lenkungswelle |
| 304 | Fahrassistenzsystem | | |
| 305 | Remanenzeinrichtung | | |
| 306 | Sicherheitseinrichtung | | |
| 307 | Antriebseinrichtung | | |

## Patentansprüche

1. Lenkeinrichtung (100), insbesondere Steer-by-Wire-Lenkung, zum Steuern eines Fahrzeugs mittels einer bewegbaren Lenkeinheit (301), wobei eine Bewegung der Lenkeinheit (301) mittels wenigstens einer magnetorheologischen Bremseinrichtung (1) bremsbar ist und wobei die Bremseinrichtung (1) einen feststehenden Halter (4) und wenigstens zwei Bremskomponenten (2, 3) umfasst, wobei wenigstens eine der beiden Bremskomponenten (2, 3) durch die Lenkeinheit (310) drehbar ist und wobei wenigstens eine andere der beiden Bremskomponenten (2, 3) mit dem Halter (4) drehfest verbunden ist und wobei die beiden Bremskomponenten (2, 3) relativ zueinander kontinuierlich um eine Rotationsachse (20) drehbar sind, wobei sich eine erste Bremskomponente (2) entlang der Rotationsachse (20) erstreckt und einen Kern (21) aus einem magnetisch leitfähigen Material umfasst und wobei die zweite Bremskomponente (3) ein sich um die erste Bremskomponente (2) herum erstreckendes hohl ausgebildetes Mantelteil (13) umfasst, wobei zwischen der ersten und der zweiten Bremskomponente (2, 3) wenigstens ein umlaufender und wenigstens zum Teil mit einem magnetorheologischen Medium (6) gefüllter Spalt (5) ausgebildet ist,
**dadurch gekennzeichnet,**
**dass** der Spalt (5) wenigstens zwei unterschiedliche Bremsspaltabschnitte (5a, 5b) umfasst und dass in einem ersten Bremsspaltabschnitt (5a) eine Scheibenkontur (41) zwischen dem Mantelteil (13) und dem Kern (21) ausgebildet ist und dass in einem zweiten Bremsspaltabschnitt (5b) eine Mehrzahl von Wälzkörpern (11) auf dem Umfang des Kerns (21) angeordnet ist.

2. Lenkeinrichtung (100) nach dem vorhergehenden Anspruch, wobei die Bremseinrichtung (1) bei einer aktiven Beeinflussung des magnetorheologischen Mediums (6) ein Bremsmoment und bei einer inaktiven Beeinflussung des magnetorheologischen Mediums (6) ein Grundmoment aufweist und wobei das Grundmoment wenigstens um den Faktor 50 und vorzugsweise wenigstens um den Faktor 90 geringer ist als ein maximal bereitstellbares Bremsmoment.

3. Lenkeinrichtung (100) nach einem der vorhergehenden Ansprüche, wobei die Bremseinrichtung (1) bei einer inaktiven Beeinflussung des magnetorheologischen Mediums (6) ein Grundmoment von maximal 0,5 Nm und vorzugsweise maximal 0,25 Nm aufweist und/oder wobei mit der Bremseinrichtung (1) durch eine aktive Beeinflussung des magnetorheologischen Mediums (6) ein maximales Bremsmoment von wenigstens 25 Nm und vorzugsweise wenigstens 45 Nm erzeugbar ist.

4. Lenkeinrichtung (100) nach einem der vorhergehenden Ansprüche, wobei mit dem zweiten Bremsspaltabschnitt (5b) ein wenigstens doppelt so hohes Bremsmoment wie mit dem ersten Bremsspaltabschnitt (5a) erzeugbar ist.

5. Lenkeinrichtung (100) nach einem der vorhergehenden Ansprüche, wobei ein Bremsmoment mit dem ersten Bremsspaltabschnitt (5a) mit einer höheren Auflösung als mit dem zweiten Bremsspaltabschnitt (5b) einstellbar ist und wobei der erste Bremsspaltabschnitt (5a) vorzugsweise eine wenigstens um den Faktor 10 höhere Auflösung als der zweite Bremsspaltabschnitt (5b) aufweist und wobei mit dem ersten Bremsspaltabschnitt (5a) ein Bremsmoment mit einer Auflösung von wenigstens 0,5 Nm und vorzugsweise wenigstens 0,25 Nm erzeugbar ist.

6. Lenkeinrichtung (100) nach einem der vorhergehenden Ansprüche, wobei dem ersten Bremsspaltabschnitt (5a) eine erste elektrische Spule (261) und dem zweiten Bremsspaltabschnitt (5b) eine separat steuerbare zweite elektrische Spule (262) zugeordnet ist.

7. Lenkeinrichtung (100) nach einem der vorhergehenden Ansprüche, umfassend wenigstens ein Lenkungssteuergerät (302) zur Ansteuerung der Bremseinrichtung (1) in Abhängigkeit einer Position der Lenkeinheit (301) und/oder eines Bewegungsparameters der Lenkeinheit (301) und/oder eines Betriebszustands des Fahrzeugs, wobei die wenigstens zwei Bremsspaltabschnitte (5a, 5b) durch das Lenkungssteuergerät (302) separat ansteuerbar sind und wobei das Lenkungssteuergerät (302) dazu geeignet und ausgebildet ist, in Abhängigkeit der Höhe eines einzustellenden Bremsmoments wenigstens einen Bremsspaltabschnitt (5a, 5b) der wenigstens zwei Bremsspaltabschnitte (5a, 5b) auszuwählen und damit die Bewegung der Lenkeinheit (301) zu bremsen.

8. Lenkeinrichtung (100) nach dem vorhergehenden Anspruch, wobei das Lenkungssteuergerät (302) dazu geeignet und ausgebildet ist, eine Bewegbarkeit der Lenkeinheit (301) zu blockieren und das dazu notwendige Bremsmoment überwiegend und vorzugsweise nur mit dem zweiten Bremsspaltabschnitt (5b) zu erzeugen.

9. Lenkeinrichtung (100) nach einem der beiden vorhergehenden Ansprüche, wobei das Lenkungssteuergerät (302) dazu geeignet und ausgebildet ist, in Abhängigkeit eines Fahrassistenzsystems (304) eine Bewegbarkeit der Lenkeinheit (301) zu bremsen oder sogar zu blockieren, sodass beispielsweise kritische Lenkbewegungen verhinderbar sind, und dazu wenigstens einen Bremsspaltabschnitt (5a, 5b) der wenigstens zwei Bremsspaltabschnitte (5a, 5b) auszuwählen und anzusteuern.

10. Lenkeinrichtung (100) nach einem der drei vorhergehenden Ansprüche, wobei das Lenkungssteuergerät (302) dazu geeignet und ausgebildet ist, eine Benutzereigenschaft für die Einstellung des Bremsmoments zu berücksichtigen und/oder ein Benutzerverhalten mittels wenigstens eines Algorithmus des maschinellen Lernens zu ermitteln und für die Einstellung des Bremsmoments zu berücksichtigen.

11. Lenkeinrichtung (100) nach einem der vorhergehenden Ansprüche, wobei das magnetorheologische Medium (6) wenigstens ein metallisches Pulver umfasst und wobei das metallische Pulver einen Volumenanteil von wenigstens 50% und vorzugsweise wenigstens 60 % aufweist und wobei das metallische Pulver insbesondere mit einer Beschichtung ausgestattet ist.

12. Lenkeinrichtung (100) nach einem der vorhergehenden Ansprüche, umfassend wenigstens eine Remanenzeinrichtung (305) und/oder wenigstens eine Permanentmagneteinheit, welche dazu geeignet und ausgebildet ist, auch ohne Zufuhr von elektrischem Strom ein Bremsmoment mit wenigstens einem der wenigstens zwei Bremsspaltabschnitte (5a, 5b, 5c) aufrechtzuerhalten.

13. Lenkeinrichtung (100) nach einem der vorhergehenden Ansprüche, umfassend wenigstens eine Antriebseinrichtung (307) zur Erzeugung eines Antriebsmoments zum aktiven Bewegen der Lenkeinheit (301) und wobei das maximale Bremsmoment des zweiten Bremsspaltabschnitts (5b) wenigstens das Doppelte des maximalen Antriebsmoments der Antriebseinrichtung (307) beträgt.

14. Lenkeinrichtung (100) nach einem der vorhergehenden Ansprüche, wobei die Scheibenkontur (41) wenigstens eine Sternkontur (40) umfasst, sodass sich in dem Bereich der Sternkontur (40) eine veränderliche Spalthöhe (40c) über den Umfang des Bremsspaltabschnitts (5a) ergibt und wobei an der Sternkontur (40) Magnetfeldkonzentratoren (80, 81) angeordnet sind, welche radial in den Bremsspaltabschnitt (5a) hineinragen.

15. Lenkeinrichtung (100) nach einem der vorhergehenden Ansprüche, wobei wenigstens drei Bremsspaltabschnitte (5a, 5b, 5c) vorgesehen sind und wobei axial zwischen einem ersten Bremsspaltabschnitt (5a) und einem zweiten Bremsspaltabschnitt (5b) wenigstens ein dritter Bremsspaltabschnitt (5c) angeordnet ist und dass dem ersten Bremsspaltabschnitt (5a) wenigstens eine erste elektrische Spule (261) und dem zweiten Bremsspaltabschnitt (5b) wenigstens eine separat steuerbare zweite elektrische Spule (262) zugeordnet ist.

16. Lenkeinrichtung (100) nach dem vorhergehenden Anspruch, wobei die erste elektrische Spule (261) und die zweite elektrische Spule (262) jeweils zwischen dem Mantelteil (13) und dem Kern (21) aufgenommen und jeweils um die Rotationsachse (20) herum gewickelt sind.

17. Lenkeinrichtung (100) nach einem der beiden vorhergehenden Ansprüche, wobei die erste elektrische Spule (261) und die zweite elektrische Spule (262) unterschiedlich ausgebildet sind und wobei sich die erste elektrische Spule (261) und die zweite elektrische Spule (262) in wenigstens einem Parameter aus einer Gruppe von Parametern unterscheiden, welche Gruppe als Parameter den Drahtdurchmesser und Drahtquerschnitt , die Wicklungszahl, das Wickelfenster, die Wickelart, die Spulenbreite, den Spulendurchmesser und das Material umfasst.

18. Verfahren zum Betreiben einer Lenkeinrichtung (100) mit einer magnetorheologischen Bremseinrichtung (1) mit zwei Bremskomponenten (2, 3), wobei die beiden Bremskomponenten (2, 3) relativ zueinander kontinuierlich um eine Rotationsachse (20) drehbar sind, wobei sich eine erste Bremskomponente (2) entlang der Rotationsachse (20) erstreckt und einen Kern (21) aus einem magnetisch leitfähigen Material umfasst und wobei die zweite Bremskomponente (3) ein sich um die erste Bremskomponente (2) herum erstreckendes hohl ausgebildetes Mantelteil (13) umfasst, wobei zwischen der ersten und der zweiten Bremskomponente (2, 3) wenigstens drei axial voneinander beabstandete und umlaufende und wenigstens zum Teil mit einem magnetorheologischen Medium (6) gefüllte Bremsspaltabschnitte (5a, 5b, 5c) ausgebildet sind,
**dadurch gekennzeichnet,**
**dass** eine erste elektrische Spule (261) ein gesteuertes Magnetfeld in einem ersten und einem dritten Bremsspaltabschnitt (5a, 5c) erzeugt und dass unabhängig davon eine zweite elektrische Spule (262) ein gesteuertes Magnetfeld in einem zweiten und dem dritten Bremsspaltabschnitt (5b, 5c) erzeugt, um abhängig von der Drehzahl unterschiedlich starke Bremswirkungen zu erzeugen.

## Claims

1. A steering device (100), in particular a steer-by-wire steering for steering a vehicle by means of a movable steering unit (301), wherein movements of the steering unit (301) can be braked by means of at least one magnetorheological braking device (1), and wherein the braking device (1) comprises a stationary holder (4) and at least two brake components (2, 3), wherein at least one of the two brake components (2, 3) is provided for rotation by the steering unit (310), and wherein at least one other of the two brake components (2, 3) is non-rotatably connected with the holder (4), and wherein the two brake components (2, 3) are provided for continuous rotation relative to one another around a rotational axis (20), wherein a first brake component (2) extends along the rotational axis (20) and comprises a core (21) of a magnetically conductive material, and wherein the second brake component (3) comprises a sheath part (13) configured hollow and extending around the first brake component (2), wherein between the first and second brake components (2, 3) at least one circumferential gap (5) is configured, which is at least partially filled with a magnetorheological medium (6),
**characterized in**
**that** the gap (5) comprises at least two different brake gap sections (5a, 5b), and that in a first brake gap section (5a), a disk contour (41) is configured between the sheath part (13) and the core (21), and that in a second brake gap section (5b), a plurality of rolling members (11) is disposed on the circumference of the core (21).

2. The steering device (100) according to the preceding claim, wherein, in actively influencing the magnetorheological medium (6), the braking device (1) shows a braking momentum, and in inactively influencing the magnetorheological medium (6), shows a base momentum, and wherein the base momentum is lower by the factor of 50 and preferably at least by a factor of 90, than is the maximum braking momentum that can be provided.

3. The steering device (100) according to any of the preceding claims, wherein the braking device (1), in inactively influencing the magnetorheological medium (6), shows a base momentum of maximally 0.5 Nm and preferably maximally 0.25 Nm, and/or wherein the braking device (1) enables to generate, by actively influencing the magnetorheological medium (6), a maximum braking momentum of at least 25 Nm and preferably at least 45 Nm.

4. The steering device (100) according to any of the preceding claims, wherein the second brake gap section (5b) can generate a braking momentum that is at least twice that generated by the first brake gap section (5a).

5. The steering device (100) according to any of the preceding claims, wherein the first brake gap section (5a) can set a braking momentum with a higher resolution than can the second brake gap section (5b), and wherein the first brake gap section (5a) preferably shows a resolution higher at least by a factor of 10 than does the second brake gap section (5b), and wherein the first brake gap section (5a) can generate a braking momentum with a resolution of at least 0.5 Nm and preferably at least 0.25 Nm.

6. The steering device (100) according to any of the preceding claims, wherein a first electric coil (261) is assigned to the first brake gap section (5a), and a second electric coil (262) provided to be actuated separately, to the second brake gap section (5b).

7. The steering device (100) according to any of the preceding claims, comprising at least one steering control device (302) for actuating the braking device (1) in dependence on the position of the steering unit (301) and/or the movement parameter of the steering unit (301) and/or the operating state of the vehicle, wherein the at least two brake gap sections (5a, 5b) can be actuated separately by the steering control device (302), and wherein the steering control device (302) is suitable and configured, in dependence on the strength of a braking momentum provided to be set, to select at least one brake gap section (5a, 5b) of the at least two brake gap sections (5a, 5b), to thereby decelerate the movement of the steering unit (301).

8. The steering device (100) according to the preceding claim, wherein the steering control device (302) is suitable and configured to block the movability of the steering unit (301) and to generate the braking momentum required therefor, predominantly and preferably with the second brake gap section (5b) only.

9. The steering device (100) according to any of the two preceding claims, wherein the steering control device (302) is suitable and configured, in dependence on a driver assistance system (304), to brake or even to block the movability of the steering unit (301), so that for example critical steering movements can be prevented, and to this end, to select and actuate at least one brake gap section (5a, 5b) of the at least two brake gap sections (5a, 5b).

10. The steering device (100) according to any of the three preceding claims, wherein the steering control device (302) is suitable and configured to take into account a user characteristic for setting and adjusting the braking momentum and/or to determine the user's behavior by means of at least one algorithm of machine learning and to take it into account for setting and adjusting the braking momentum.

11. The steering device (100) according to any of the preceding claims, wherein the magnetorheological medium (6) comprises at least one metallic powder, and wherein the metallic powder has a volume fraction of at least 50% and preferably, at least 60 %, and wherein the metallic powder is in particular provided with a coating.

12. The steering device (100) according to any of the preceding claims, comprising at least one remanence device (305) and/or at least one permanent magnet unit, which is suitable and configured, even absent electricity supply, to maintain a braking momentum with at least one of the at least two brake gap sections (5a, 5b, 5c).

13. The steering device (100) according to any of the preceding claims, comprising at least one driving device (307) for generating a driving torque for actively moving the steering unit (301), and wherein the maximum braking momentum of the second brake gap section (5b) is in particular at least twice the maximum driving torque of the driving device (307).

14. The steering device (100) according to any of the preceding claims, wherein the disk contour (41) comprises at least one star contour (40), so that in the region of the star contour (40) a variable gap height (40c) ensues over the circumference of the brake gap section (5a), and wherein magnetic field concentrators (80, 81) are disposed on the star contour (40), which protrude radially into the brake gap section (5a).

15. The steering device (100) according to any of the preceding claims, wherein at least three brake gap sections (5a, 5b, 5c) are provided, and wherein at least one third brake gap section (5c) is disposed axially between a first brake gap section (5a) and a second brake gap section (5b), and wherein at least one first electric coil (261) is assigned to the first brake gap section (5a), and at least one second electric coil (262) provided to be actuated separately, is assigned to the second brake gap section (5b).

16. The steering device (100) according to the preceding claim, wherein the first electric coil (261) and the second electric coil (262) are each accommodated between the sheath part (13) and the core (21) and are each wound around the the rotational axis (20).

17. The steering device (100) according to any of the two preceding claims, wherein the first electric coil (261) and the second electric coil (262) are configured differently, and wherein the first electric coil (261) and the second electric coil (262) differ in at least one parameter from a group of parameters comprising, as a parameter, the wire diameter and the wire cross section, the number of coils, the coil window, the winding type, the coil width, the coil diameter, and the material.

18. A method for operating a steering device (100) with a magnetorheological braking device (1) with two brake components (2, 3), wherein the two brake components (2, 3) are provided for continuous rotation relative to one another around a rotational axis (20), wherein the first brake component (2) extends along the rotational axis (20) and comprises a core (21) of a magnetically conductive material, and wherein the second brake component (3) comprises a sheath part (13) configured hollow and extending around the first brake component (2), wherein between the first and second brake components (2, 3) at least three brake gap sections (5a, 5b, 5c) are configured, which are axially spaced apart and circumferential and at least partially filled with a magnetorheological medium (6),
**characterized in**
**that** a first electric coil (261) generates a controlled magnetic field in a first and a third brake gap section (5a, 5c), and that independently thereof, a second electric coil (262) generates a controlled magnetic field in the second and third brake gap sections (5b, 5c), to generate braking actions of different strengths, dependent on the rotational speed.

## Revendications

1. Dispositif de direction (100), notamment direction steer-by-wire, destiné à commander un véhicule au moyen d'une unité de direction mobile (301), un mouvement de ladite unité de direction (301) pouvant être freiné au moyen d'au moins un dispositif de freinage (1) magnétorhéologique, et ledit dispositif de freinage (1) comprenant un élément de maintien fixe (4) et au moins deux éléments de frein (2, 3), au moins un des deux éléments de frein (2, 3) pouvant être entraîné en rotation par l'unité de direction (310) et au moins un autre des deux éléments de frein (2, 3) étant relié solidaire en rotation à l'élément de maintien (4), et les deux éléments de frein (2, 3) pouvant être entraînés en rotation en continu l'un par rapport à l'autre autour d'un axe de rotation (20), un premier élément de frein (2) s'étendant le long d'un axe de rotation (20) et comprenant un noyau (21) composé d'un matériau magnétiquement conducteur, et le deuxième élément de frein (3) comprenant une partie gaine (13) formée creuse qui s'étend autour du premier élément de frein (2), au moins un espace (5) périphérique et rempli au moins partiellement d'un fluide magnétorhéologique (6) étant formé entre le premier et le deuxième élément de frein (2, 3),
**caractérisé en ce**
**que** ledit espace (5) comprend au moins deux sections différentes d'espace de frein (5a, 5b) et que dans une première section d'espace de frein (5a), un contour de disque (41) est formé entre la partie gaine (13) et le noyau (21), et qu'une pluralité de corps de rouleau (11) sont agencés autour de la circonférence du noyau (21) dans une deuxième section de fente de frein (5b).

2. Dispositif de direction (100) selon la revendication précédente, le dispositif de freinage (1) présentant, lorsque le fluide magnétorhéologique (6) est soumis à une action, un couple de freinage, et, lorsque le fluide magnéto-rhéologique (6) n'est soumis à aucune action, un couple de base, et ledit couple de base étant inférieur du facteur d'au moins 50 et de préférence du facteur d'au moins 90 à un couple de freinage maximal pouvant être fourni.

3. Dispositif de direction (100) selon l'une quelconque des revendications précédentes, le dispositif de freinage (1) présentant, lorsque le fluide magnéto-rhéologique (6) n'est soumis à aucune action, un couple de base de 0,5 Nm au maximum, et de préférence de 0,25 Nm au maximum, et/ou un couple de freinage maximal d'au moins 25 Nm et de préférence au moins 45 Nm pouvant être généré à l'aide du dispositif de frein (1) lorsque le fluide magnéto-rhéologique (6) est soumis à une action.

4. Dispositif de direction (100) selon l'une quelconque des revendications précédentes, un couple de freinage deux fois plus élevé pouvant être généré à l'aide de la deuxième section d'espace de frein (5b) qu'à l'aide de la première section d'espace de frein (5a).

5. Dispositif de direction (100) selon l'une quelconque des revendications précédentes, un couple de freinage pouvant être réglé à une résolution supérieure avec la première section d'espace de frein (5a) qu'avec la deuxième section d'espace de frein (5b), et la première section d'espace de frein (5a) présentant une résolution supérieure de préférence du facteur d'au moins 10 à la deuxième section d'espace de frein (5b), et un couple de freinage d'une résolution d'au moins 0,5 Nm et de préférence au moins 0,25 Nm pouvant être généré avec la première section d'espace de frein (5a).

6. Dispositif de direction (100) selon l'une quelconque des revendications précédentes, une première bobine électrique (261) étant associée à la première section d'espace de frein (5a), et une deuxième bobine électrique (262) commandable séparément étant associée à la deuxième section d'espace de frein (5b).

7. Dispositif de direction (100) selon l'une quelconque des revendications précédentes, comprenant au moins un appareil de commande de direction (302) destiné à piloter le dispositif de freinage (1) en fonction d'une position de l'unité de direction (301) et/ou d'un paramètre de mouvement de l'unité de direction (301) et/ou d'un état de fonctionnement du véhicule, lesdites au moins deux sections d'espace de frein (5a, 5b) pouvant être pilotées séparément par l'appareil de commande de direction (302), et ledit appareil de commande de direction (302) étant susceptible de et conçu pour choisir au moins une section d'espace de frein (5a, 5b) parmi lesdites au moins deux sections d'espace de frein (5a, 5b) en fonction de la hauteur d'un couple de freinage à régler, et ainsi, pour freiner le mouvement de l'unité de direction (301).

8. Dispositif de direction (100) selon la revendication précédente, l'appareil de commande de direction (302) étant susceptible de et conçu pour bloquer une mobilité de l'unité de direction (301) et pour générer le couple de freinage nécessaire à cela, essentiellement et de préférence avec seulement la deuxième section d'espace de frein (5b).

9. Dispositif de direction (100) selon l'une quelconque des deux revendications précédentes, l'appareil de commande de direction (302) étant susceptible de et conçu pour freiner ou même bloquer une mobilité de l'unité de direction (301) en fonction d'un système d'aide à la conduite (304), de sorte à pouvoir éviter, par exemple, des mouvements de direction critiques, et pour choisir et piloter au moins une section d'espace de frein (5a, 5b) desdites au moins deux sections d'espace de frein (5a, 5b).

10. Dispositif de direction (100) selon l'une quelconque des trois revendications précédentes, l'appareil de commande de direction (302) étant susceptible de et conçu pour prendre en compte une propriété utilisateur pour le réglage du couple de frein, et/ou de déterminer un comportement utilisateur au moyen d'au moins un algorithme de l'apprentissage machine et d'en tenir compte pour le réglage du couple de freinage.

11. Dispositif de direction (100) selon l'une quelconque des revendications précédentes, le fluide magnéto-rhéologique (6) comprenant au moins une poudre métallique, et ladite poudre métallique présentant une fraction volumique d'au moins 50 % et de préférence d'au moins 60 %, et ladite poudre métallique étant équipée notamment d'un revêtement.

12. Dispositif de direction (100) selon l'une quelconque des revendications précédentes, comprenant au moins un dispositif de rémanence (305) et/ou au moins une unité d'aimant permanent qui est susceptible de et conçue pour maintenir, même sans alimentation en courant électrique, un couple de freinage avec au moins l'une des deux sections d'espace de frein (5a, 5b, 5c).

13. Dispositif de direction (100) selon l'une quelconque des revendications précédentes, comprenant au moins un dispositif d'entraînement (307) destiné à générer un couple d'entraînement destiné à mettre en mouvement l'unité de direction (301), et le couple de freinage de la deuxième section d'espace de frein (5b) étant au moins le double du couple d'entraînement maximal du dispositif d'entraînement (307).

14. Dispositif de direction (100) selon l'une quelconque des revendications précédentes, le contour de disque (41) comprenant au moins un contour étoilé (40), de sorte qu'il en résulte, au niveau du contour étoilé (40), une hauteur d'espace (40c) variable sur toute la circonférence de la section de l'espace de frein (5a), et des concentrateurs de champ magnétique (80, 81) étant agencés sur le contour étoilé (40), lesquels saillent de manière radiale dans la section d'espace de frein (5a).

15. Dispositif de direction (100) selon l'une quelconque des revendications précédentes, au moins trois sections d'espace de frein (5a, 5b, 5c) étant prévues et au moins une troisième section d'espace de frein (5c) étant agencée de manière axiale entre une première section d'espace de frein (5a) et une deuxième section d'espace de frein (5b), et qu'au moins une première bobine électrique (261) est associée à la première section d'espace de frein (5a) et au moins une deuxième bobine électrique (262) commandable de manière séparée est associée à la deuxième section d'espace de frein (5b).

16. Dispositif de direction (100) selon la revendication précédente, la première bobine électrique (261) et la deuxième bobine électrique (262) étant montées chacune entre la partie gaine (13) et le noyau (21), et chacune enroulée autour de l'axe de rotation (20).

17. Dispositif de direction (100) selon l'une quelconque des deux revendications précédentes, la première bobine électrique (261) et la deuxième bobine électrique (262) étant conçues différentes l'une de l'autre, et la première bobine électrique (261) et la deuxième bobine électrique (262) étant distinctes l'une de l'autre en au moins un paramètre issu d'un groupe de paramètres, lequel groupe comprend comme paramètres le diamètre et la section de fil, le nombre d'enroulements, la fenêtre d'enroulement, le genre d'enroulement, la largeur de bobine, le diamètre de bobine et le matériau.

18. Procédé destiné à faire fonctionner un dispositif de direction (100) muni d'un dispositif de freinage magnéto-rhéologique (1), muni de deux éléments de frein (2, 3), lesdits deux éléments de frein (2, 3) pouvant être entraînés en rotation de manière continue l'un par rapport à l'autre autour d'un axe de rotation (20), un premier élément de frein (2) s'étendant le long d'un axe de rotation (20) et comprenant un noyau (21) composé d'un matériau magnétiquement conducteur, et le deuxième élément de frein (3) comprenant une partie gaine (13) formée creuse s'étendant autour du premier élément de frein (2), au moins trois sections d'espace de frein (5a, 5b, 5c) étant formées entre le premier et le deuxième élément de frein (2, 3), espacées axialement les unes des autres, périphériques et remplies au moins partiellement d'un fluide magnéto-rhéologique (6),
**caractérisé en ce**
**qu'**une première bobine électrique (261) génère un champ magnétique commandé dans une première et une troisième section d'espace de frein (5a, 5c), et qu'indépendamment de cela, une deuxième bobine électrique (262) génère un champ magnétique commandé dans une deuxième et la troisième section d'espace de frein (5b, 5c), pour générer des effets de freinage de forces différentes en fonction du régime moteur.
